(19) Europäisches Patentamt
European Patent Office
Office européen des brevets

(11) **EP 3 706 081 B1**

(12) **EUROPÄISCHE PATENTSCHRIFT**

(45) Veröffentlichungstag und Bekanntmachung des Hinweises auf die Patenterteilung:
**28.04.2021  Patentblatt 2021/17**

(51) Int Cl.:
***G06T 11/00*** *(2006.01)*

(21) Anmeldenummer: **19161295.1**

(22) Anmeldetag: **07.03.2019**

(54) **VERFAHREN ZUR ERMITTLUNG VON KORRIGIERTEN AUFNAHMEGEOMETRIEN VON PROJEKTIONSBILDERN**

METHOD OF DETERMINING CORRECTED GEOMETRIES OF PROJECTION IMAGES

PROCÉDÉ DE DÉTERMINATION DE GÉOMÉTRIES D'IMAGES CORRIGÉES D'IMAGES DE PROJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.09.2020  Patentblatt 2020/37**

(73) Patentinhaber: **Siemens Healthcare GmbH 91052 Erlangen (DE)**

(72) Erfinder:
• **Kaethner, Christian 91301 Forchheim (DE)**
• **Kowarschik, Markus 90408 Nürnberg (DE)**
• **Manhart, Michael 90765 Fürth (DE)**
• **Preuhs, Alexander 91058 Erlangen (DE)**

(56) Entgegenhaltungen:
• **OUADAH S ET AL: "Self-calibration of cone-beam CT geometry using 3D-2D image registration", PHYSICS IN MEDICINE AND BIOLOGY, INSTITUTE OF PHYSICS PUBLISHING, BRISTOL GB, Bd. 61, Nr. 7, 10. März 2016 (2016-03-10), Seiten 2613-2632, XP020301634, ISSN: 0031-9155, DOI: 10.1088/0031-9155/61/7/2613 [gefunden am 2016-03-10]**
• **Jérome Lesaint: "Data consistency conditions in X-ray transmission imaging and their application to the self-calibration problem", , 7. November 2018 (2018-11-07), XP055614406, Université Grenoble Alpes Gefunden im Internet: URL:https://tel.archives-ouvertes.fr/tel-0 1896806v2 [gefunden am 2019-08-21]**

EP 3 706 081 B1

**Beschreibung**

Die Erfindung betrifft ein Verfahren zur Ermittlung von korrigierten Aufnahmegeometrien von Projektionsbildern. Daneben betrifft die Erfindung eine Verarbeitungseinrichtung, ein Computerprogramm und ein computerlesbares Medium.

Insbesondere im Rahmen der medizinischen Bildgebung werden Verfahren genutzt, bei denen eine Vielzahl von Projektionsbildern aufgenommen werden, um aus diesen dreidimensionale Bilddaten zu rekonstruieren. Beispielsweise wird eine dreidimensionale Bildgebung auf Röntgenbasis als wichtige Datenquelle im Rahmen der medizinischen Diagnostik genutzt. Um ausreichend Daten für eine möglichst fehlerfreie Darstellung zu generieren, wird eine Aufnahmeeinrichtung, beispielsweise ein Röntgendetektor mit einer zugeordneten Röntgenquelle, beispielsweise auf einer kreisförmigen oder kreissegmentförmigen oder spiralförmigen Trajektorie um ein Untersuchungsobjekt bewegt. Alternativ kann es vorteilhaft sein, eine Datengenerierung über frei wählbare Positionen und Trajektorien zu ermöglichen.

Beispielsweise aufgrund von Herstellungstoleranzen und/oder einer Elastizität einer zur Verstellung der Aufnahmeeinrichtung genutzten Stellmechanik kann es zu Abweichungen zwischen einer Sollaufnahmegeometrie und einer tatsächlich vorliegenden Aufnahmegeometrie für die einzelnen Projektionsbilder kommen. Ebenso kann eine Bewegung des Untersuchungsobjekts, beispielsweise eines Patienten, zu einer Abweichung von einer Sollaufnahmegeometrie führen. Werden diese Abweichungen bei der Rekonstruktion nicht berücksichtigt bzw. korrigiert, so kann dies zu Bildartefakten oder einer anderen Verringerung der Bildqualität führen.

Eine übliche Möglichkeit entsprechende Abweichungen zu erkennen und zu korrigieren ist es, medizinische Bildgebungseinrichtungen vor der Bildgebung zu kalibrieren, beispielsweise dadurch, dass ein genau bekannter Testkörper vermessen wird, um die bei der Erfassung von Projektionsbildern bei einer Bewegung der Aufnahmeeinrichtung entlang einer bestimmten Trajektorie bzw. mit einem bestimmten Ansteuermuster tatsächlich auftretenden Aufnahmegeometrien zu erkennen und bei der Bildrekonstruktion zu nutzen. Problematisch bei diesem Vorgehen ist es jedoch, dass eine solche Kalibrierung für jede potenziell genutzte Trajektorie zur Aufnahme der Projektionsbilder separat durchgeführt werden muss, da sich Toleranzen bzw. Elastizitäten bei unterschiedlichen Pfaden der Aufnahmeeinrichtung unterschiedlich auswirken können. Somit ist eine solche vorgelagerte Kalibrierung nur bedingt geeignet, wenn die im Rahmen der Aufnahme abgefahrenen Trajektorien bzw. Aufnahmegeometrien in Abhängigkeit eines konkret untersuchten Untersuchungsobjekts oder der konkreten Untersuchungssituation im Wesentlichen frei angepasst werden können. Zudem können durch eine solche vorgelagerte Kalibrierung keine Abweichungen der Aufnahmegeometrie aufgrund einer Bewegung des Untersuchungsobjekts kompensiert werden.

Zur Korrektur von Aufnahmegeometrien bzw. zur Bewegungskompensation werden im Stand der Technik verschiedene Ansätze vorgeschlagen. Der Artikel Frysch, R., Rose, G. (2015, October), Rigid motion compensation in interventional C-arm CT using consistency measure on projection data, In: International Conference on Medical Image Computing and Computer-Assisted Intervention (pp. 298-306), Springer, Cham, schlägt vor, zur Kompensation von Kopfbewegungen Redundanzen in Projektionsdaten auszuwerten. Allerdings können mit diesem Ansatz bestimmte rigide Bewegungsmuster sowie nicht rigide Bewegungen wie Atemoder Herzbewegungen nur eingeschränkt kompensiert werden, da sie mittels der angewandten Redundanzbedingungen nur schwer bestimmbar sind. Insbesondere können bei einer Bewegung der Aufnahmeeinrichtung innerhalb einer Ebene Bewegungen innerhalb dieser Ebene nur bedingt erkannt und kompensiert werden.

Ein weiterer Ansatz zur Bewegungskompensation besteht darin, Abweichungen zwischen einer Vorwärtsprojektion des rekonstruierten Bildvolumens und den Projektionsbildern durch Variation der angenommenen Abbildungsgeometrie zu minimieren. Dieser Ansatz wird in dem Artikel Ouadah, S., et al. (2016), Self-calibration of cone-beam CT geometry using 3D-2D image registration, Physics in Medicine & Biology, 61(7), 2613, näher beschrieben. Dieser Ansatz ist jedoch nur Erfolg versprechend, wenn bereits ein Volumen in ausreichender Bildqualität rekonstruiert werden konnte, und ist zudem relativ rechenaufwändig.

Lesaint, Jerôme, "Data consistency conditions in X-ray transmission imaging and their application to the self-calibration problem", PhD diss., Universite Grenoble Alpes, 2018 offenbart die Verwendung von Konsistenzbedingungen im Projektionsraum zur Kalibrierung eines Mikro-CT Systems.

Alternativ kann ein Verfahren genutzt werden, das im Rahmen einer Bewegungskorrektur Bildqualitätsmetriken auswertet. Ein solches Verfahren wird in dem Artikel Wicklein, J., et al. (2012), Image features for misalignment correction in medical flat-detector CT, Medical Physics, 39(8), 4918-4931, näher erläutert. Bei diesem Ansatz ist es jedoch fordernd, eine Bildqualitätsmetrik aufzufinden, die eine robuste Messung der Bewegungsstärke aus den Projektionsbildern erlaubt. Das Bildqualitätsmaß sollte für verschiedene Datensätze und Bewegungen möglichst immer ein globales Optimum an der Stelle mit der korrekten Bewegungsschätzung haben und sich um das globale Optimum möglichst konvex verhalten, das heißt geringe und stärkere Bewegungen sollten sich jeweils monoton auf die Bildqualitätsmetrik auswirken. Die komplexen Anforderungen an die Bildqualitätsmetrik können dazu führen, dass bei größeren Fehlern der angenommenen Aufnahmegeometrien nur ein lokales Optimum und somit nicht die korrekte Aufnahmegeometrie aufgefunden wird. Zudem sind aufgrund der erforderlichen Rückprojektionen in jedem Iterationsschritt größere Fehler der Aufnahmegeometrie nur mit hohem Rechenaufwand kompensierbar.

Ein weiterer Ansatz zur Reduktion von fehlerbehafteten Aufnahmegeometrien bei einer Nutzung von freiwählbaren Trajektorien der Aufnahmeeinrichtung ist aus der Druckschrift DE 10 2011 003 653 A1 bekannt. Das dort vorgeschlagene Verfahren basiert auf einer modellbasierten Berechnung von Projektionsmatrizen.

Der Erfindung liegt somit die Aufgabe zugrunde, ein verbessertes Verfahren zur Korrektur von Aufnahmegeometrien von Projektionsbildern anzugeben, dass insbesondere auch bei größeren Fehlern der angenommenen Aufnahmegeometrie eine robuste und hochqualitative Korrektur mit relativ geringem Rechenaufwand ermöglicht.

Die Aufgabe wird erfindungsgemäß durch ein Verfahren zur Ermittlung von korrigierten Aufnahmegeometrien von Projektionsbildern eines Projektionsbilddatensatzes gelöst, das die folgenden Schritte umfasst:

- Bereitstellen eines Projektionsbilddatensatzes, der mehrere in verschiedenen Aufnahmegeometrien durch eine Aufnahmeeinrichtung erfasste Projektionsbilder eines Untersuchungsobjekts umfasst,
- Ermitteln einer vorläufigen Aufnahmegeometrie für jedes der Projektionsbilder durch ein erstes Optimierungsverfahren, indem eine erste Kostenfunktion durch Variation der vorläufigen Aufnahmegeometrie minimiert wird, wobei die erste Kostenfunktion von mehreren Konsistenzmaßen abhängt, die in Abhängigkeit der vorläufigen Aufnahmegeometrie für ein jeweiliges Paar von Projektionsbildern ermittelt werden, und
- Ermittlung der jeweiligen korrigierten Aufnahmegeometrie für jedes der Projektionsbilder durch ein zweites Optimierungsverfahren, indem eine zweite Kostenfunktion durch Variation der korrigierten Aufnahmegeometrien minimiert wird, wobei die zweite Kostenfunktion von einem Maß für eine Bildqualität von in Abhängigkeit der Projektionsbilder und der korrigierten Aufnahmegeometrien rekonstruierten Bilddaten abhängt, wobei in einem ersten Iterationsschritt des zweiten Optimierungsverfahrens die durch das erste Optimierungsverfahren ermittelten vorläufigen Aufnahmegeometrien als korrigierte Aufnahmegeometrien verwendet werden.

Im Rahmen der Erfindung wurde erkannt, dass durch eine sequenzielle Nutzung der beiden genannten Optimierungsverfahren überraschend eine hohe Korrekturqualität bei relativ geringem Rechenaufwand erreicht werden kann. Hierbei wurde erkannt, dass die Schwächen von bildqualitätbasierten Optimierungsverfahren, nämlich ein Mangel an Robustheit in bestimmten Anwendungssituationen und ein relativ hoher Rechenaufwand, dadurch reduziert oder sogar vollständig vermieden werden können, dass eine Voroptimierung durch ein Verfahren erfolgt, dass die Aufnahmegeometrie auf Basis von erwarteten Konsistenten zwischen verschiedenen Projektionsbildern korrigiert.

Da beim ersten Optimierungsverfahren Konsistenzen zwischen den Projektionsbildern ausgewertet werden, kann auf eine rechenaufwändige Rekonstruktion, beispielsweise eine Rückprojektion, und auf Vorwärtsprojektionen verzichtet werden, so dass das erste Optimierungsverfahren mit geringem Rechenaufwand durchführbar ist. Zugleich kann ein solches Optimierungsverfahren, wie eingangs erläutert, jedoch nicht alle Fehler der Aufnahmegeometrie robust kompensieren. Beschreiben jeweils alle Aufnahmegeometrien eine Bewegung der Aufnahmeeinrichtung im Wesentlichen innerhalb einer Ebene, so sind Verschiebungen oder Rotationen innerhalb dieser Ebene nur bedingt erkenn- bzw. korrigierbar. Diese Schwäche dieses Optimierungsverfahrens kann jedoch durch Nachschalten des zweiten Optimierungsverfahrens wiederum kompensiert werden. Aufgrund der Vorkorrektur durch das erste Optimierungsverfahren ist der Suchraum für die korrekte Aufnahmegeometrie im Rahmen des zweiten Optimierungsverfahrens deutlich reduziert, so dass auch das zweite Optimierungsverfahren mit vertretbarem Rechenaufwand durchgeführt werden kann. Die beiden Optimierungsverfahren wirken somit synergetisch zusammen, um mit geringem Aufwand eine robuste und genaue Korrektur von Aufnahmegeometrien zu ermöglichen.

Wird ein Untersuchungsobjekt in verschiedenen Aufnahmegeometrien abgebildet, kann insbesondere bei einer Röntgenabbildung mit Kegelstrahlgeometrie ausgenutzt werden, dass hierbei gewisse Redundanzen zwischen den ersten Projektionsbildern bzw. eine gewisse Konsistenz, also ein gewisser Zusammenhang zwischen bestimmten Bildbereichen zu erwarten ist. Die zu erwartenden Konsistenzen werden in Abschnitt 2.1 der eingangs zitierten Veröffentlichung von R. Frysch detailliert dargestellt und sollen hier nur kurz zusammengefasst widergegeben werden.

Wird eine Ebene betrachtet, die durch eine Röntgenquelle verläuft und die einen Röntgendetektor, also die Aufnahmeeinrichtung, schneidet, so wird jener Teil des Untersuchungsobjekts, der in dieser Ebene liegt, auf der Schnittlinie zwischen Detektorebene und der betrachteten Ebene abgebildet. Werden nun zwei Projektionsbilder betrachtet, für die die jeweiligen Positionen der Röntgenquelle beide in einer Ebene liegt, die auch beide Detektorebenen schneidet, so wird der in dieser Ebene liegende Abschnitt des Untersuchungsobjekts in beiden Projektionsbildern auf einer jeweiligen Linie abgebildet. Wird zumindest der gleiche absorptionsrelevante Bereich des Untersuchungsobjekts vollständig innerhalb der jeweiligen Linien abgebildet, sind entsprechende Bildbereiche stark korreliert. Ist dies nicht der Fall, so kann dies auf eine fehlerhaft angenommene Aufnahmegeometrie hinweisen. Dies kann wie folgt ausgenutzt werden:

Für jedes der Projektionsbilder i und jede dieses schneidende Ebene kann eine Größe $S_i(\upsilon, s)$ wie folgt berech-

net werden:

$$S_i(\upsilon,s) = \frac{s^2 + D^2}{D^2} \cdot \frac{\partial}{\partial s} \Re[\tilde{g}_i](\upsilon,s) \,,$$

mit

$$\tilde{g}_i(x,y) = \frac{D}{\sqrt{x^2 + y^2 + D^2}} \cdot g_i(x,y)$$

Hierbei beschreibt $\upsilon$ den Winkel, in dem die entsprechende Ebene die Detektorebene schneidet und s den Abstand dieser Schnittlinie zum Ursprung. D ist der Abstand zwischen Röntgenquelle und Röntgendetektor und $\Re[\tilde{g}_i](\upsilon,s)$ ist die radontransformierte der kosinusgewichteten Projektionsbilder $g_i$. x und y sind die Pixelkoordinaten in dem jeweiligen Projektionsbild. Werden nun N-Ebenen betrachtet, in denen jeweils bei der angenommenen Aufnahmegeometrie beide Röntgenquellen liegen und die die Detektorflächen beider Projektionsbilder schneiden, so kann für das Paar i, j von zwei Projektionsbildern das folgende Konsistenzmaß definiert werden:

$$\varepsilon_{ij} = \frac{1}{N} \sum_{n=1}^{N} \left| S_i\left(\upsilon_i^n, s_i^n\right) - S_j\left(\upsilon_j^n, s_j^n\right) \right|^p$$

Der Exponent p gibt hierbei vor, welche p-Norm gewählt wird. Die Veröffentlichung von R. Frysch schlägt vor, p auf 0,3 zu setzen. Es können jedoch auch andere Werte verwendet werden.

Die Kostenfunktion kann beispielsweise dadurch ermittelt werden, dass über alle Paare von Projektionsbildern die jeweiligen Konsistenzmaße $\varepsilon_{ij}$ summiert werden. Somit wird insgesamt eine p-Norm der Differenzen zwischen den verschiedenen S-Werten ermittelt. Eine Variation der vorläufigen Aufnahmegeometrie führt einerseits zu einer Veränderung der Position der Röntgenquelle für die verschiedenen Projektionsbilder und kann somit zu einer Auswertung unterschiedlicher Ebenen für einzelne Projektionsbildpaare führen. Andererseits ändert sich die Lage der Detektorebene und somit der Verlauf der Schnittlinie zwischen Ebene und Detektorebene. Somit kann durch Variation der Aufnahmegeometrien die Kostenfunktion minimiert werden.

Im Rahmen des zweiten Optimierungsverfahrens kann in jedem Optimierungsschritt bzw. jeder Iteration ein dreidimensionaler Bilddatensatz rekonstruiert werden. Verschiedene Möglichkeiten zur Rekonstruktion von dreidimensionalen Bilddatensätzen bei bekannten Aufnahmegeometrien der Projektionsbilder sind im Stand der Technik wohl bekannt und sollen nicht detailliert erläutert werden. Das Maß für die Bildqualität kann anschließend in Abhängigkeiten der gesamten rekonstruierten Bilddaten oder auch in Abhängigkeit von einem oder mehreren Schnittbildern berechnet werden. Beispielsweise können auch Bildqualitäten für mehrere Schnittbilder berechnet werden und die Kostenfunktion kann beispielsweise eine p-Norm oder Ähnliches dieser unterschiedlichen Bildqualitäten sein. Verschiedene nutzbare Maße für die Bildqualität werden in Abschnitt II C der eingangs zitierten Veröffentlichung von J. Wicklein et al. diskutiert. Hierbei können diese Maße einzeln genutzt werden oder die Kostenfunktion kann eine gewichtete Summe oder p-Norm mehrerer dieser Maße umfassen. Besonders bevorzugt wird das Maß für die Bildqualität, wie später noch genauer erläutert werden wird, durch einen Algorithmus ermitteln, der durch Maschinenlernen trainiert wird.

Zur Optimierung bzw. zur Variation der vorläufigen Aufnahmegeometrien bzw. der korrigierten Aufnahmegeometrien können insbesondere Optimierungsalgorithmen zur Optimierung nicht linearer Funktionen mit mehreren Parametern, beispielsweise ein Downhill-Simplex-Verfahren, das auch als Nelder-Mead-Verfahren bezeichnet wird, verwendet werden.

Der Projektionsbilddatensatz kann ermittelt werden, indem für jedes der Projektionsbilder eine Sollposition und/oder Sollorientierung für die Aufnahmeeinrichtung vorgegeben und wenigstens ein Aktor verwendet wird, um die Aufnahmeeinrichtung in die Sollposition und/oder Sollorientierung zu verbringen, wonach die Aufnahmeeinrichtung zur Aufnahme des jeweiligen Projektionsbildes verwendet wird, wobei in einem ersten Iterationsschritt des ersten Optimierungsverfahrens in Abhängigkeit der jeweiligen Sollposition und/oder Sollorientierung vorgegebene Aufnahmegeometrien als vorläufige Aufnahmegeometrien verwendet werden. Die Position des Untersuchungsobjekts kann hierbei als konstant angenommen werden oder beispielsweise sensorisch zumindest näherungsweise erfasst und berücksichtigt werden. Insbesondere kann eine Trajektorie vorgegeben werden, entlang der die Aufnahmeeinrichtung durch die Aktorik geführt wird, um sie nacheinander in die verschiedenen Sollpositionen zu verbringen. Die tatsächliche Trajektorie der Aufnahmeeinrichtung bzw. die tatsächlich genutzten Aufnahmegeometrien können von der vorgegebenen Trajektorie bzw. von den vorgegebenen Aufnahmegeometrien abweichen. Hierbei wäre es prinzipiell möglich, statische Abweichungen, beispielsweise Kalibrierabweichungen, und/oder von Umgebungsbedingungen abhängige Abweichungen, beispielsweise aufgrund einer thermischen Ausdehnung von Komponenten, durch eine entsprechende Kalibrierung bzw. Berücksichtigung von Umgebungsbedingungen zu berücksichtigen. Toleranzen, die von einem konkreten Verstellpfad abhängen, und die beispielsweise durch ein Spiel oder eine Elastizität der Verstellmechanik bedingt sein können, können jedoch bei einer im Wesentlichen freien Wahl von Sollpositionen bzw. Sollorientierungen bzw. einer genutzten Trajektorie kaum anderweitig kompensiert werden, so dass das erläuterte Verfahren insbesondere dazu genutzt werden kann, aus diesen Gründen resultierende Fehler der Aufnahmegeometrien zu kompensieren.

Die Sollposition und/oder Sollorientierung kann in Abhängigkeit des Untersuchungsobjekts und/oder einer Bedieneingabe des Benutzers vorgegeben werden und/oder die Sollpositionen können nicht auf einer Kreisbahn liegen. Wie bereits erwähnt ist in den genannten Fällen eine Korrektur der Aufnahmegeometrie beispielsweise durch eine vorangehende Kalibrierung kaum möglich, so dass das erfindungsgemäße Verfahren mit besonderem Vorteil angewendet werden kann. Durch das erfindungsgemäße Verfahren kann insbesondere bei einer im Wesentlichen freien Vorgabe der Sollpositionen bzw. Sollorientierungen bzw. der Trajektorie, entlang der die Aufnahmeeinrichtung geführt wird, dennoch eine sehr gute Genauigkeit der korrigierten Aufnahmegeometrien erreicht werden und somit insbesondere eine hochqualitative Rekonstruktion der dreidimensionalen Bilddaten.

Als Aufnahmeeinrichtung kann ein Röntgendetektor verwendet werden, der gemeinsam mit einer Röntgenquelle an einem Gestell, insbesondere einem C-Bogen, angeordnet ist. Im Rahmen der Bestimmung einer korrigierten Aufnahmegeometrie kann hierbei im einfachsten Fall angenommen werden, dass die relative Lage von Röntgenquelle und Röntgendetektor bekannt und unveränderlich ist. Um jedoch auch Verwindungen des C-Bogens bzw. andere Abweichungen der relativen Position berücksichtigen zu können, ist es möglich, dass im Rahmen der Optimierung der vorläufigen und/oder korrigierten Aufnahmegeometrie auch eine Änderung der relativen Lage von Röntgenquelle und Röntgendetektor berücksichtigt wird. Wird eine fächerförmig abstrahlende Röntgenquelle mit ausreichendem Öffnungswinkel verwendet, kann hierbei typischerweise ein Fehler der Orientierung der Röntgenquelle vernachlässigt werden, so dass die Aufnahmegeometrie beispielsweise ausschließlich durch die Position und Orientierung des Röntgendetektors und die Position der Röntgenquelle beschrieben werden kann.

Der Röntgendetektor und die Röntgenquelle können verstellbar oder starr an dem Gestell befestigt sein. Eine Berücksichtigung einer relativen Lage von Röntgenquelle und Röntgendetektor ist insbesondere dann relevant, wenn zumindest eine dieser Komponenten verstellbar an dem Gestell befestigt ist.

Der Projektionsbilddatensatz kann ermittelt werden, indem für jedes der Projektionsbilder die oder eine Sollposition und/oder Sollorientierung für die Aufnahmeeinrichtung bezüglich einem Lagermittel vorgegeben wird, das das Untersuchungsobjekt lagert, und der oder ein Aktor verwendet wird, um die Aufnahmeeinrichtung in die Sollposition und/oder Sollorientierung zu verbringen, wonach die Aufnahmeeinrichtung zur Aufnahme des jeweiligen Projektionsbildes verwendet wird, wobei in dem oder einem ersten Iterationsschritt des ersten Optimierungsverfahrens die vorläufigen Aufnahmegeometrien unter der Annahme vorgegeben werden, dass das Untersuchungsobjekt zwischen den Aufnahmen der Projektionsbilder bezüglich dem Lagermittel unbewegt ist oder sich gemäß einem vorgegebenen Bewegungsmuster bewegt. Anders ausgedrückt kann das erfindungsgemäße Verfahren zumindest auch dazu genutzt werden, eine Bewegung des Untersuchungsobjekts bzw. eines Abschnitts des Untersuchungsobjekts zu kompensieren bzw. dazu, eine Abweichung von einem erwarteten oder vorgegebenen Bewegungsmuster zu korrigieren. Ein vorgegebenes Bewegungsmuster kann beispielsweise sensorisch erfasst werden, beispielsweise durch eine Kamera und am Untersuchungsobjekt angebrachte Marker, oder anhand eines Modells für ein pseudoperiodisches Bewegungsmuster, beispielsweise eine Atmung oder einen Herzschlag, ermittelt werden.

Das zweite Optimierungsverfahren kann unter der Randbedingung durchgeführt werden, dass der Wert der ersten Kostenfunktion für die korrigierten Aufnahmegeometrien kleiner oder gleich ist als der Wert der ersten Kostenfunktion für die durch das erste Optimierungsverfahren ermittelten vorläufigen Aufnahmegeometrien. Anders ausgedrückt werden im Rahmen des zweiten Optimierungsverfahrens ausschließlich Aufnahmegeometrien berücksichtigt, die bezüglich der im ersten Optimierungsverfahren genutzten Kostenfunktion wenigstens genauso optimal sind, wie die letztlich im ersten Optimierungsverfahren ermittelten vorläufigen Aufnahmegeometrien. Es wird somit verhindert, dass durch Nutzung des zweiten Optimierungsverfahrens eine Verschlechterung bezüglich der im ersten Optimierungsverfahren genutzten Kostenfunktion resultiert.

Dies kann insbesondere vorteilhaft sein, wenn im ersten Optimierungsverfahren die Aufnahmegeometrie ausschließlich bezüglich Freiheitsgraden optimiert wird, bezüglich der die erste Kostenfunktion besonders empfindlich ist, wie später noch genau erläutert werden wird. Die zweite Optimierungsfunktion kann in diesem Fall primär zur Korrektur der verbleibenden Freiheitsgrade dienen, wobei durch die Randbedingung eine Vergrößerung des Fehlers in den bereits bei der ersten Optimierung berücksichtigten Freiheitsgraden im Ergebnis verhindert werden kann. Die Auswertung der Randbedingung kann beispielsweise dadurch erfolgen, dass der Wert der ersten Kostenfunktion am Ende der ersten Optimierung gespeichert wird und mit den Werten der ersten Kostenfunktion für die im Rahmen der zweiten Optimierung bestimmten korrigierten Aufnahmegeometrien verglichen wird.

Zur Ermittlung des Maßes für die Bildqualität kann ein Algorithmus verwendet werden, der durch ein Verfahren des Maschinenlernens trainiert ist. Als Algorithmus kann ein neuronales Netz, insbesondere ein Convolutional Neural Network, verwendet werden. Algorithmen des Maschinenlernens, insbesondere Convolutional Neural Networks, sind besonders geeignet, um eine Vielzahl von Bildeigenschaften in verschiedenen Auflösungsstufen zu erkennen und zu berücksichtigen. Im Vergleich zu bekannten Bildqualitätsmaßen, wie sie beispielsweise in der eingangs zitierten Veröffentlichung von J. Wicklein diskutiert werden, kann ein Algorithmus des Maschinenlernens eine Vielzahl geeigneter Bildeigenschaften erlernen und bestmöglich kombinieren.

Der Algorithmus kann als Eingangsdaten die gesamten rekonstruierten Bilddaten, insbesondere einen dreidimensionalen Volumenbilddatensatz, verarbeiten. Es ist jedoch auch möglich, dass nur Teile der rekonstruierten Bilddaten bzw. aus diesen generierte Verarbeitungsdaten durch den Algorithmus verarbeitet werden. Beispielsweise kann der Algorithmus als Eingangsdaten ein Schichtbild oder mehrere Schichtbilder verarbeiten, die aus den rekonstruierten Bilddaten ermittelt werden. Der Algorithmus kann als Ausgabewert insbesondere ein einzelnes Skalar ausgeben, das das Maß für die Bildqualität ist. Dies ermöglicht, wie im Folgenden genauer erläutert werden wird, ein einfaches Training des Algorithmus und eine einfache Weiterverarbeitung der Ausgangsdaten. Potenziell könnten jedoch auch Merkmalsvektoren oder Ähnliches ausgegeben werden, um beispielsweise mehrere Dimensionen einer Bildqualität separat zu analysieren.

In neuronalen Netzen, insbesondere in Convolutional Neural Networks, können aus den Eingangsdaten in mehreren nacheinander geschalteten Schichten durch Faltung, Anwendung von Aktivierungsfunktionen und Unterabtastung Bildmerkmale extrahiert werden. Als letzte Schicht kann eine sogenannte "fully connected layer" verwendet werden, um die Bildmerkmale zu einem Skalar zu kombinieren, der das Maß für die Bildqualität ist. Die Funktion von neuronalen Netzen und insbesondere von Convolutional Neural Networks ist im Stand der Technik aus anderen Anwendungsgebieten wohl bekannt und soll daher nicht detailliert beschrieben werden.

Das Training des Algorithmus kann insbesondere durch ein überwachtes Training erfolgen, bei dem einzelne Trainingsdatensätze jeweils Eingangsdaten für den Algorithmus und ein Sollergebnis umfassen. Die Trainingsdatensätze können jeweils dreidimensionale Bilddaten oder Schichtbilddaten eines oder mehrerer Schichtbilder umfassen. Die dreidimensionalen Bilddaten bzw. Schichtbilddaten können mit einem bekannten Fehler der Aufnahmegeometrie rekonstruiert werden. Dies ermöglicht es, ein diesen Fehler beschreibendes Maß als Sollergebnis in den jeweiligen Trainingsdatensatz mitaufzunehmen. Im Rahmen des überwachten Lernens kann eine Abweichung des Verarbeitungsergebnisses des Algorithmus von dem Sollergebnis minimiert werden. Hierzu kann beispielsweise eine Fehlerrückführung verwendet werden. Verschiedene Möglichkeiten zum Training von Algorithmen des Maschinenlernens sind im Stand der Technik bekannt und sollen nicht detailliert erläutert werden.

Der Algorithmus kann durch Trainingssätze trainiert sein oder werden, die jeweils rekonstruierte Bilddaten und einen Sollwert für das für diese rekonstruierten Bilddaten zu ermittelnde Maß für die Bildqualität umfassen, wobei die rekonstruierten Bilddaten derart aus vorgegebenen Projektionsbildern rekonstruiert werden oder sind, dass bei der Rekonstruktion eine gemäß einer Modifikationsvorgabe modifizierte Aufnahmegeometrie für wenigstens eines der Projektionsbilder berücksichtigt wird, wobei der Sollwert in Abhängigkeit der Modifikationsvorgabe ermittelt wird oder ist. Hierdurch kann, wie obig erläutert, erreicht werden, dass die dreidimensionalen Bilddaten bzw. Schichtbilddaten mit einem bekannten Fehler rekonstruiert sind und der Trainingsdatensatz ein diesen Fehler beschreibendes Maß umfasst.

Hierbei können zunächst Projektionsbilder ermittelt werden, deren Abbildungsgeometrie mit hoher Genauigkeit bekannt ist. Derartige Projektionsbilder können beispielsweise ermittelt werden, indem ein unbewegtes Objekt mit einer fest vorgegebenen Trajektorie für die Aufnahmeeinrichtung bzw. mit einer fest vorgegebenen Abfolge von Aufnahmegeometrien abgebildet wird, wobei für diese Trajektorie bzw. Abfolge wie eingangs erläutert eine Kalibrierung der genutzten Vorrichtung durchgeführt wurde. Alternativ oder ergänzend können Projektionsbilder mit entsprechend genau bekannter Aufnahmegeometrie künstlich durch eine Vorwärtsprojektion von dreidimensionalen Bilddaten generiert werden. Hierbei können beispielsweise synthetische dreidimensionale Bilddaten oder Bilddaten die anderweitig mit hoher Qualität rekonstruiert wurden, genutzt werden. Die hochgenaue und im Wesentlichen fehlerfreie Aufnahmegeometrie dieser Projektionsbilder kann anschließend modifiziert werden. Hierbei können für einen Satz von Projektionsbildern eine Vielzahl von verschiedenen Modifikationen durchgeführt werden. Beispielsweise können für verschiedene der Projektionsbilder gleiche oder verschiedene Verschiebungen und/oder Rotationen der Aufnahmeeinrichtung bezüglich des Untersuchungsobjekts vorgesehen werden. Soll wie vorangehend erläutert auch eine Relativbewegung zwischen Röntgenquelle und Röntgendetektor berücksichtigt werden, kann dies bei der Modifikation der Aufnahmegeometrie berücksichtigt werden. Anschließend kann bzw. können durch einen Rekonstruktionsalgorithmus ein rekonstruierter Bilddatensatz bzw. mehrere rekonstruierte Bilddatensätze in Abhängigkeit der modifizierten Aufnahmegeometrie bzw. -geometrien rekonstruiert werden.

Da bekannt ist, wie stark die Aufnahmegeometrie modifiziert wurde, kann ein Maß hierfür in den entsprechenden Trainingsdatensatz mit aufgenommen werden. Im einfachsten Fall könnte beispielsweise eine gewichtete Summe von im Rahmen der Modifikationen genutzten Bewegungen und/oder Drehungen als Sollwert aufgenommen werden. Es hat sich jedoch als vorteilhaft herausgestellt, einen sogenannten Back Projection Mismatch als Sollwert zu verwenden bzw. einen Sollwert zu ermitteln, der in Abhängigkeit von dem Back Projection Mismatch ermittelt wurde.

Der Back Projection Mismatch ist ein Maß dafür, wie stark einzelne Bildpunkte durch die Modifikation der Abbildungsgeometrie in den Projektionsbildern verschoben werden. Ein solches Maß kann beispielsweise dadurch bestimmt werden, dass synthetische dreidimensionale Bilddaten vorgegeben werden, die mehrere einzelne Bildpunkte umfassen, die vorzugsweise in gleichen Abständen zueinander angeordnet sind. Nun wird für jedes zu berücksichtigende Projektionsbild eine Vorwärtsprojektion der einzelnen Bildpunkte einmal für eine korrekte Aufnahmegeometrie und einmal für eine gemäß der Modifikationsvorgabe modifizierte Aufnahmegeometrie ermittelt und der Abstand bzw. Abstandsvektor zwischen den so projizierten Punkten als Abbildungsfehler für dieses Projektionsbild und diesen Punkt bestimmt. Der Back Projection Mismatch wird als Maß, insbesondere als 2-Norm oder andere p-Norm, der Abbildungsfehler für die verschiedenen Punkte und Projektionsbilder ermittelt.

Zusammenfassend betrifft die Erfindung somit auch ein Verfahren zum Training eines Algorithmus durch ein Verfahren des Maschinenlernens. Hierbei kann insbesondere ein überwachtes Lernen erfolgen und die Trainingsdatensätze können wie obig beschrieben vorgegeben werden. Die Erfindung betrifft zudem einen durch ein solches Trainingsverfahren trainierten Algorithmus zum Bestimmen eines Maßes für eine Bildqualität von aus Projektionsbildern rekonstruierten Bilddaten bzw. als Verfahrensergebnis Parameter eines Algorithmus, die im Rahmen eines solchen Verfahrens des Maschinenlernens ermittelt werden. Zudem betrifft die Erfindung ein computerlesbares Medium, welches den trainierten Algorithmus in Form von einlesbaren und ausführbaren Programmabschnitten speichert bzw. welches im Rahmen des Verfahrens des Maschinenlernens ermittelte Parameter zur Parametrisierung eines solchen Algorithmus speichert.

In dem Verfahren zur Ermittlung von korrigierten Aufnahmegeometrien von Projektionsbildern kann die zweite Kostenfunktion zusätzlich von mehreren Konsistenzmaßen abhängen, die in Abhängigkeit der korrigierten Aufnahmegeometrie für ein jeweiliges Paar von Projektionsbildern ermittelt werden. Insbesondere kann die zweite Kostenfunktion einen Term umfassen, der der ersten Kostenfunktion abgesehen davon entspricht, dass zur Ermittlung dieses Terms anstatt der vorläufigen Aufnahmegeometrien die korrigierten Aufnahmegeometrien berücksichtigt werden. Dieser Term bzw. ein Term, der von den Konsistenzmaßen abhängt, kann in der zweiten Kostenfunktion durch einen Gewichtungsfaktor gewichtet sein, der angibt, wie stark die Konsistenzmaße das zweite Optimierungsverfahren beeinflussen. Durch die Berücksichtigung der Konsistenzmaße auch in der zweiten Kostenfunktion kann gleichzeitig eine Optimierung der Konsistenz zwischen Projektionsbildpaaren und der Bildqualität der rekonstruierten Bilddaten erfolgen, wodurch in vielen Fällen die Konvergenz der Optimierung beschleunigt und/oder das Optimierungsergebnis verbessert werden kann.

Die vorläufige und die korrigierte Aufnahmegeometrie jedes Projektionsbildes kann durch mehrere Geometrieparameter beschrieben sein, wobei die Geometrieparameter jeweils eine Translation oder eine Rotation der Aufnahmeeinrichtung oder einer Komponente der Aufnahmeeinrichtung bezüglich des Untersuchungsobjekts beschreiben, wobei im Rahmen des ersten Optimierungsverfahrens ausschließlich eine nicht alle Geometrieparameter umfassende Untergruppe der Geometrieparameter variiert wird, um die vorläufigen Aufnahmegeometrien zu bestimmen. Werden beispielsweise bei Röntgenaufnahmen sowohl die Röntgenquelle als auch der Röntgendetektor weitgehend innerhalb einer Ebene geführt, so können Abweichungen der Aufnahmegeometrie innerhalb dieser Ebene, also Rotationen um eine senkrecht zu dieser Ebene stehende Achse bzw. Verschiebungen in der Ebene die Konsistenzmaße nur relativ geringfügig beeinflussen, während Rotationen um in der Ebene liegende Achsen bzw. eine Verschiebung senkrecht zur Ebene zu einer deutlich stärkeren Veränderung der Konsistenzmaße führen können. Die erste Kostenfunktion kann daher, in Abhängigkeit der konkret genutzten Aufnahmegeometrien bzw. Trajektorie der Aufnahmeeinrichtung von einigen der Geometrieparameter weit stärker abhängen als von anderen Geometrieparametern. Im Rahmen des ersten Optimierungsverfahrens können somit nur jene Geometrieparameter variiert werden, deren Variation sich bei den genutzten bzw. geplanten Aufnahmegeometrien relativ stark auf die Konsistenzmaße und somit auf die erste Kostenfunktion auswirkt. Die verbleibenden Geometrieparameter können z. B. erst im Rahmen des zweiten Optimierungsverfahrens variiert werden.

Zusätzlich zu den genannten Geometrieparametern oder alternativ hierzu kann die Aufnahmegeometrie auch eine Verformung des Untersuchungsobjekts bzw. eine Relativbewegung von Abschnitten des Untersuchungsobjekts zueinander, beispielsweise bei einer Atmung oder einem Herzschlag eines Patienten, beschreiben. Hierbei ist es insbesondere möglich, dass diese zusätzlichen Parameter ausschließlich im zweiten Optimierungsverfahren variiert werden, da erkannt wurde, dass dieses für entsprechende Korrekturen weit geeigneter ist.

Für wenigstens eines der Projektionsbilder kann durch ein drittes Optimierungsverfahren eine finale Aufnahmegeometrie ermittelt werden, indem eine dritte Kostenfunktion durch Variation der finalen Aufnahmegeometrie minimiert wird, wobei die dritte Kostenfunktion von einem Maß für eine Abweichung zwischen einer Vorwärtsprojektion von dreidimensionalen Bilddaten gemäß der finalen Abbildungsgeometrie und dem Projektionsbild abhängt, wobei in einem ersten Iterationsschritt des dritten Optimierungsverfahrens die durch das zweite Optimierungsverfahren ermittelte Aufnahmegeometrie für das jeweilige Projektionsbild als finale Aufnahmegeometrie verwendet wird.

Als Maß für die Abweichung zwischen der Vorwärtsprojektion und dem jeweiligen Projektionsbild kann insbesondere ein Ähnlichkeitsmaß verwendet werden, beispielsweise die sogenannte Normalized Gradient Information. Die Berechnung eines entsprechenden Ähnlichkeitsmaßes ist beispielsweise in Abschnitt 2.4 der eingangs zitierten Veröffentlichung von S. Ouadah näher erläutert. Selbstverständlich können auch beliebige andere Ähnlichkeitsmaße, beispielsweise Korrelationsfunktionen und Ähnliches, verwendet werden.

Die dreidimensionalen Bilddaten, auf deren Basis die Vorwärtsprojektion ermittelt wird, können aus den Projektionsbildern ermittelt werden. Hierbei können beispielsweise die im Rahmen des zweiten Optimierungsverfahrens ermittelten korrigierten Abbildungsgeometrien genutzt werden. In späteren Iterationsschritten können auch bereits finale Abbildungsgeometrien verwendet werden, die in vorangehenden Iterationsschritten ermittelt wurden.

Da durch die vorangehende Optimierung die korrigierte Abbildungsgeometrie bereits eine sehr gute Näherung für die zu ermittelnde finale Aufnahmegeometrie darstellt, sind nur noch geringfügige Variationen der Aufnahmegeometrie erforderlich, womit eine schnelle Konvergenz des dritten Optimierungsverfahrens zu erwarten ist. Obwohl eine Optimierung auf Basis einer Vorwärtsprojektion relativ rechenaufwändig ist, ist das dritte Optimierungsverfahren somit mit vertretbarem Aufwand durchführbar. Insbesondere können die dreidimensionalen Bilddaten bereits mit hoher Bildqualität bereitgestellt werden, so dass eine langsame Konvergenz bzw. eine nicht ausreichende Robustheit einer Registrierung durch 2D/3D-Registrierung, wie sie ansonsten auftreten könnte, vermieden werden kann. Die zusätzliche Durchführung des dritten Optimierungsverfahrens kann insbesondere vorteilhaft sein, wenn relativ komplexe Abweichungen der Aufnahmegeometrie, beispielsweise durch eine elastische Verformung des Untersuchungsobjekts, kompensiert werden sollen.

Die Variation der vorläufigen und/oder der korrigierten und/oder der finalen Aufnahmegeometrie kann für wenigstens ein jeweiliges Projektionsbild jeweils in Abhängigkeit von Ergebnisdaten eines, insbesondere durch ein Verfahren des Maschinenlernens trainierten, Algorithmus erfolgen, wobei der Algorithmus als Eingangsdaten in Abhängigkeit der Projektionsbilder rekonstruierte Bilddaten, insbesondere wenigstens ein Schichtbild, verarbeitet. Der Algorithmus kann der gleiche Algorithmus sein, der auch zur Ermittlung des Maßes für die Bildqualität dient. Beispielsweise kann der Algorithmus in diesem Fall so trainiert werden, dass die Trainingsdatensätze neben Sollwerten für das Maß für die Bildqualität Sollwerte für die Ergebnisdaten umfassen. Es ist jedoch auch möglich, einen separaten Algorithmus zu nutzen und diesen insbesondere durch entsprechende Trainingsdatensätze zu trainieren.

Die Ergebnisdaten können insbesondere vorgeben, in welche Richtung bzw. wie stark die Abbildungsgeometrien in einem jeweiligen Iterationsschritt variiert werden. Werden beispielsweise die obig erläuterten Geometrieparameter verwendet, können die Ergebnisdaten vorgeben, welche der Geometrieparameter wie stark bzw. in welche Richtung variiert werden. Hierzu kann der Algorithmus dazu trainiert werden, eine Bewegung zwischen den einzelnen Projektionsbildern bzw. eine Abweichung von einer angenommenen Abbildungsgeometrie für die einzelnen Projektionsbilder zu ermitteln. Beispielsweise kann ein Bewegungsvektorfeld ermittelt werden, dass dann in dem jeweiligen iterativen Optimierungsverfahren als Vorwissen eingesetzt werden kann, um die Bewegung bzw. Veränderung der Abbildungsgeometrie für die nächste Iteration zu ermitteln. Als Algorithmus kann beispielsweise ein Convolutional Neural Network auf Basis einer U-Netzarchitektur verwendet werden, die in dem Artikel Ronneberger O., et al. (2015), U-Net: Convolutional Networks for Biomedical Image Segmentation, In: International Conference on Medical Image Computing and computer-assisted Intervention (S.234-241), Springer, Cham, erläutert wird.

Wie bereits zum Training des Algorithmus zur Ermittlung des Maßes der Bildqualität erläutert, können zum Training Trainingsdatensätze verwendet werden, die rekonstruierte Bilddaten umfassen, bei deren Rekonstruktion eine gemäß einer vorgegebenen Modifikationsvorgabe modifizierte Aufnahmegeometrie berücksichtigt wird. Somit ist jeweils bekannt, auf welche Weise die Aufnahmegeometrie für welches der Projektionsbilder verändert wurde. Als Solldaten für die Ergebnisdaten können somit beispielsweise für jedes Projektionsbild Informationen vorgegeben werden, auf welche Weise die Abbildungsgeometrie durch die jeweilige Modifikationsvorgabe modifiziert wurde. Beispielsweise können Änderungen an den die Abbildungsgeometrie beschreibenden Geometrieparametern als Sollwerte für die Ergebnisdaten in jedem Trainingsdatensatz gespeichert sein. Dies kann dazu führen, dass die Ergebnisdaten einen relativ umfangreichen Merkmalsvektor bilden, weshalb es vorteilhaft sein kann, ein neuronales Netz gemäß der oben genannten U-Netzarchitektur vorzusehen, da diese Architektur besonders geeignet ist, umfangreiche Ergebnisdaten bereitzustellen.

Die durch das erfindungsgemäße Verfahren implementierte Korrektur der Aufnahmegeometrie kann insbesondere dazu dienen, dreidimensionale Bilddaten in Abhängigkeit der korrigierten bzw. der finalen Aufnahmegeometrien zu ermitteln. Das Verfahren kann somit auch als Teil eines Verfahrens zur Rekonstruktion eines dreidimensionalen Bilddatensatzes betrachtet werden. Somit betrifft die Erfindung auch ein Verfahren zur Rekonstruktion eines dreidimensionalen Bilddatensatzes.

Zudem betrifft die Erfindung eine Verarbeitungseinrichtung zur Ermittlung von korrigierten Aufnahmegeometrien von Projektionsbildern, die zur Durchführung des erfindungsgemäßen Verfahrens zur Ermittlung von korrigierten Aufnahmegeometrien von Projektionsbildern bzw. zur Rekonstruktion von dreidimensionalen Bilddaten eingerichtet ist. Die Verarbeitungseinrichtung kann als Teil einer medizinischen Bilderfassungseinrichtung, insbesondere einer Röntgeneinrichtung, speziell einer C-Bogen-Röntgeneinrichtung, ausgebildet sein. Die Erfindung betrifft somit auch eine medizinische Bilderfassungseinrichtung, die eine entsprechende Verarbeitungseinrichtung umfasst.

Alternativ kann die Verarbeitungseinrichtung separat von einer Einrichtung zur Erfassung von Projektionsbildern ausgebildet sein, beispielsweise als Arbeitsplatzrechner, Server oder als Cloud-Lösung bzw. netzimplementierter Dienst, bei dem eine entsprechende Funktionalität durch einen oder mehrere beabstandete Rechner bereitgestellt wird.

Zudem betrifft die Erfindung ein Computerprogramm, welches direkt in eine Speichereinrichtung einer Verarbeitungseinrichtung ladbar ist, mit Programmabschnitten, um alle Schritte des erfindungsgemäßen Verfahrens auszuführen, wenn das Computerprogramm in der Verarbeitungseinrichtung ausgeführt wird.

Die Erfindung betrifft auch ein computerlesbares Medium, auf welchem von einer Verarbeitungseinrichtung einlesbare und ausführbare Programmabschnitte gespeichert sind, um alle Schritte des erfindungsgemäßen Verfahrens auszuführen, wenn die Programmabschnitte von der Verarbeitungseinrichtung ausgeführt werden.

Weitere Vorteile und Einzelheiten zeigen die folgenden Ausführungsbeispiele sowie die zugehörigen Zeichnungen. Hierbei zeigen schematisch:

Fig. 1    ein Ablaufdiagramm eines Ausführungsbeispiels des erfindungsgemäßen Verfahrens,

Fig. 2    in einem Ausführungsbeispiel des erfindungsgemäßen Verfahrens genutzte Datenstrukturen und Algorithmen,

Fig. 3    eine medizinische Bildgebungseinrichtung, die ein Ausführungsbeispiel der erfindungsgemäßen Verarbeitungseinrichtung umfasst, und

Fig. 4    die Bereitstellung von Trainingsdatensätzen zum Training eines in dem erfindungsgemäßen Verfahren nutzbaren Algorithmus zur Ermittlung eines Maßes für eine Bildqualität von rekonstruierten Bilddaten.

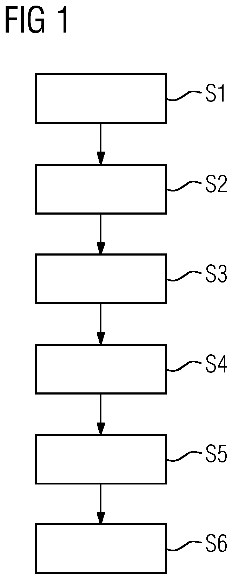

Fig. 1 zeigt ein Ausführungsbeispiel eines Verfahrens zur Ermittlung von korrigierten Aufnahmegeometrien von Projektionsbildern eines Projektionsbilddatensatzes bzw. zur Rekonstruktion von dreidimensionalen Bilddaten aus diesen Projektionsbildern. In den vorbereiteten Schritten S1 und S2 wird ein Projektionsbilddatensatz bereitgestellt, der mehrere in verschiedenen Aufnahmegeometrien durch eine Aufnahmeeinrichtung erfasste Projektionsbilder eines Untersuchungsobjekts umfasst.

Hierzu werden in Schritt S1 zu verwendende Sollaufnahmegeometrien vorgegeben, beispielsweise im Rahmen einer Untersuchungsplanung. Wird beispielsweise eine C-Bogen-Röntgeneinrichtung zur Erfassung der Projektionsbilder genutzt, kann in diesem Schritt ein Bewegungsablauf für den C-Bogen, der die Röntgenquelle und den Röntgendetektor haltert, bzw. eine Trajektorie für den als Aufnahmeeinrichtung genutzten Röntgendetektor vorgegeben werden. Zudem kann vorgegeben werden, an welchen Punkten dieser Bewegung bzw. Trajektorie Projektionsbilder erfasst werden sollen. Hierbei ist es insbesondere möglich, dass die Sollpositionen bzw. Orientierungen der Aufnahmeeinrichtung, für die Projektionsbilder erfasst werden sollen, in Abhängigkeit des Untersuchungsobjekts und/oder einer Bedieneingabe eines Benutzers vorgegeben werden bzw. dass die Sollpositionen nicht auf einer Kreisbahn liegen. Anders ausgedrückt kann es in dem erfindungsgemäßen Verfahren möglich sein, eine Erfassungstrajektorie im Wesentlichen frei vorzugeben.

In Schritt S2 werden die Projektionsbilder gemäß der in Schritt S1 vorgegebenen Vorgaben durch eine Bildgebungseinrichtung, insbesondere eine C-Bogen-Röntgeneinrichtung, erfasst. Beispielsweise aufgrund von mechanischen Toleranzen und/oder Elastizitäten in einer Verstellmechanik für die Aufnahmeeinrichtung kann hierbei die zur Aufnahme eines Projektionsbildes genutzte Aufnahmegeometrie von der in Schritt S1 geplanten Aufnahmegeometrie abweichen. Eine derartige Abweichung kann zu Bildartefakten bzw. einer Verringerung der Bildqualität in rekonstruierten Bilddaten führen und soll deshalb kompensiert werden.

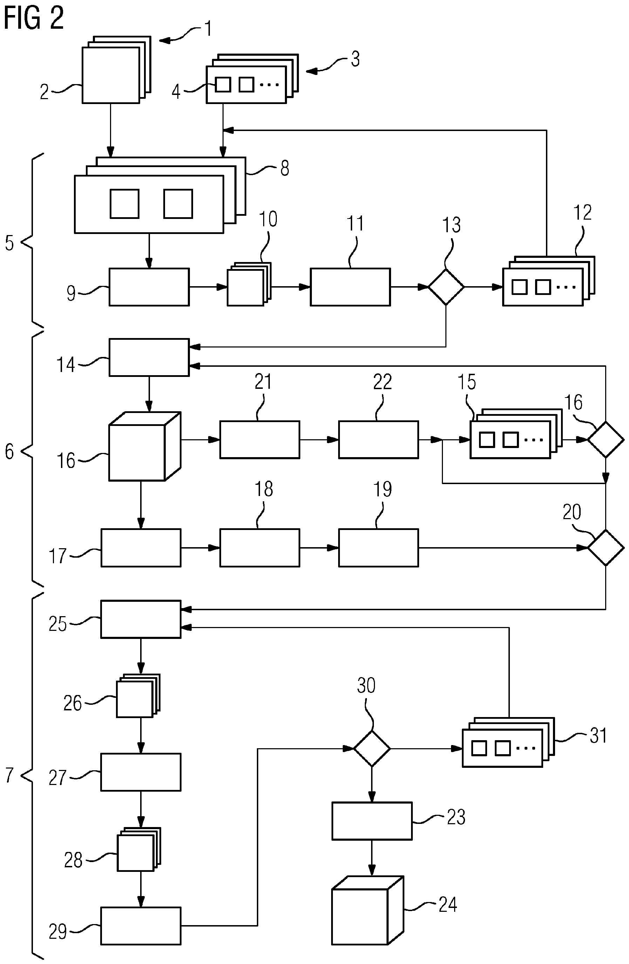

Hierzu wird in den Schritten S3, S4 und S5 ein mehrstufiges Optimierungsverfahren durchgeführt, wobei es alternativ auch möglich wäre, nur ein zweistufiges Optimierungsverfahren, also nur die Schritte S3 und S4 durchzuführen. Die einzelnen Optimierungsschritte werden später noch detailliert mit Bezug zu Fig. 2 erläutert werden und werden im Folgenden zunächst nur kurz dargestellt.

In Schritt S3 wird zunächst ein erstes Optimierungsverfahren durchgeführt, um eine vorläufige Aufnahmegeometrie für jedes der Projektionsbilder zu ermitteln. Hierbei wird eine erste Kostenfunktion minimiert, indem eine vorläufige Aufnahmegeometrie variiert wird. Die Kostenfunktion hängt von mehreren Konsistenzmaßen ab, die in Abhängigkeit der vorläufigen Aufnahmegeometrie für ein jeweiliges Paar von Projektionsbildern ermittelt werden. Die Variation der vorläufigen Aufnahmegeometrie kann von der in Schritt S1 vorgegebenen Aufnahmegeometrie ausgehen, das heißt, es kann zunächst angenommen werden, dass die dort vorgegebene Aufnahmegeometrie zumindest näherungsweise korrekt ist und nur noch geringfügig korrigiert werden muss. Hierbei kann die in Schritt S1 vorgegebene Aufnahmegeometrie bezüglich eines Lagemittels vorgegeben sein, das das Untersuchungsobjekt lagert, also beispielsweise bezüglich einer Patientenliege. Es kann zunächst angenommen werden, dass das Untersuchungsobjekt zwischen den Aufnahmen der Projektionsbilder bezüglich dem Lagermittel unbewegt ist oder sich gemäß eines vorgegebenen Bewegungsmusters bewegt. Das vorgegebene Bewegungsmuster kann beispielsweise sensorisch erfasst werden oder es kann ein Bewegungsmodell genutzt werden, um beispielsweise eine Atmung oder einen Herzschlag zu modellieren.

In Schritt S4 erfolgt eine weitere Korrektur der Aufnahmegeometrie durch ein zweites Optimierungsverfahren. Hierbei wird eine jeweilige korrigierte Aufnahmegeometrie für jedes der Projektionsbilder ermittelt, in dem eine zweite Kostenfunktion durch Variation der korrigierten Aufnahmegeometrien minimiert wird. Die zweite Kostenfunktion hängt von einem Maß für eine Bildqualität von in Abhängigkeit der Projektionsbilder und der korrigierten Aufnahmegeometrien rekonstruierten Bilddaten ab. Dieses kann, wie später noch genauer erläutert werden wird, beispielsweise durch einen Algorithmus ermittelt werden, der durch Maschinenlernen trainiert ist. Die Initialisierung im ersten Iterationsschritt erfolgt dadurch, dass zunächst die in Schritt S3 ermittelte vorläufige Aufnahmegeometrie als korrigierte Aufnahmegeometrie angenommen wird.

In einigen Anwendungsfällen, beispielsweise zu Kompensationen von elastischen Verformungen des Untersuchungsobjekts, kann es vorteilhaft sein, in Schritt S5 ein drittes Optimierungsverfahren durchzuführen, um eine finale Aufnahmegeometrie zu ermitteln. Hierbei wird eine dritte Kostenfunktion durch Variation der finalen Aufnahmegeometrie minimiert. Die dritte Kostenfunktion hängt von einem Maß für eine Abweichung zwischen einer Vorwärtsprojektion von dreidimensionalen Bilddaten gemäß der finalen Abbildungsgeometrie und dem Projektionsbild ab. Die Initialisierung erfolgt durch die in Schritt S4 ermittelten korrigierten Abbildungsgeometrien.

In Schritt S6 können dreidimensionale Bilddaten rekonstruiert werden, um diese direkt zu verwenden oder beispielsweise Schichtbilder bereitzustellen. Hierzu werden übliche Rekonstruktionsverfahren genutzt, wobei statt der in Schritt S1 vorgegebenen Aufnahmegeometrie für die einzelnen Projektionsbilder die in Schritt S5 ermittelte jeweilige finale Aufnahmegeometrie bzw. in einfachen Verfahrensvarianten die in Schritt S4 ermittelte jeweilige korrigierte Aufnahmegeometrie genutzt wird. Hierdurch kann eine erhebliche Verbesserung der Bildqualität erreicht werden.

Fig. 2 zeigt Datenstrukturen und Algorithmen, die zur Umsetzung des Verfahrens zur Ermittlung von korrigierten Aufnahmegeometrien genutzt werden können. Zu Beginn des Verfahrens wird ein Projektionsbilddatensatz 1 vorgegeben, der eine Vielzahl von Projektionsbildern 2 umfasst. Den einzelnen Projektionsbildern 2 ist jeweils eine Aufnahmegeometrie 3 zugeordnet, die insbesondere eine Sollaufnahmegeometrie sein kann, die angibt, welche Geometrie zur Aufnahme der einzelnen Projektionsbilddaten vorgegeben wurde. Die jeweilige Aufnahmegeometrie kann beispielsweise mehrere Geometrieparameter 4 beschreiben, die die Lage und Orientierung einer Aufnahmeeinrichtung, beispielsweise eines Röntgendetektors, bezüglich des Untersuchungsobjekts beschreiben. Zusätzlich kann beispielsweise eine Position der Röntgenquelle, eine relative Lage von verschiedenen Abschnitten des Untersuchungsobjekts zueinander oder Ähnliches beschrieben sein.

Wie bereits zur Fig. 1 erläutert wurde, sind die zunächst vorliegenden Aufnahmegeometrien 3 insbesondere dann, wenn die Aufnahmegeometrien bzw. die zur Aufnahme genutzte Trajektorie frei vorgegeben wurde bzw. wenn sich ein Patient bewegt, potenziell deutlich fehlerbelastet. Um die Aufnahmegeometrien 4 zu korrigieren werden zumindest ein erstes Optimierungsverfahren 5 und ein zweites Optimierungsverfahren 6 verwendet. Optional kann zusätzlich ein drittes Optimierungsverfahren 7 verwendet werden.

Im ersten Optimierungsverfahren 5 werden in jeder Iteration zunächst Paare 8 der Projektionsbilder 2 gebildet und für jedes der Paare 8 werden durch einen Algorithmus 9 in Abhängigkeit der vorläufigen Aufnahmegeometrien 12 für die Projektionsbilder 2 und des jeweiligen Paares 8 Konsistenzmaße 10 ermittelt. Die Ermittlung von Konsistenzmaßen $\varepsilon_{ij}$ für einzelne Paare von Projektionsbildern wurde bereits vorangehend erläutert und soll daher hier nicht wiederholt werden. In der ersten Iteration des ersten Optimierungsverfahrens 5 können als vorläufige Aufnahmegeometrien 12 zunächst die Aufnahmegeometrien 4 verwendet werden. In späteren Iterationen werden die vorläufigen Aufnahmegeometrien 12 durch eine Variation der Aufnahmegeometrie bestimmt.

Die einzelnen Konsistenzmaße 10 werden in Form einer ersten Kostenfunktion 11 zusammengefasst, die im ersten Optimierungsverfahren 5 minimiert werden soll. Die erste Kostenfunktion kann insbesondere eine p-Norm der Konsistenzmaße 10 sein. In einem Prüfschritt 13 wird in jeder Iteration geprüft, ob das erste Optimierungsverfahren 5 bereits konvergiert ist, also beispielsweise ob ein Grenzwert für den Wert der ersten Kostenfunktion 11 unterschritten ist. Falls dies nicht der Fall ist, erfolgt eine Variation der vorläufigen Aufnahmegeometrien 12 und das erste Optimierungsverfahren 5 wird wiederholt. Zur Variation der vorläufigen Aufnahmegeometrien 12 bzw. zur Optimierung kann insbesondere ein Algorithmus zur Optimierung von nicht linearen Funktionen verwendet werden, beispielsweise ein Downhill-Simplex-Verfahren.

Wie bereits erläutert kann in einigen Fällen, beispielsweise wenn zur Aufnahme des Projektionsbilddatensatzes 1 im Wesentlichen ausschließlich eine Relativbewegung und Rotation von Aufnahmeeinrichtung und Untersuchungsobjekt innerhalb einer Ebene erfolgt, eine Variation einiger der Geometrieparameter 4 nur zu einer geringfügigen Veränderung der Konsistenzmaße 10 und somit der Kostenfunktion 11 führen. Es kann somit vorteilhaft sein, in dem ersten Optimierungsverfahren 5 nur jene Geometrieparameter 4 im Rahmen der Variation der vorläufigen Aufnahmegeometrie 12 zu variieren, deren Variation einen starken Einfluss auf die Konsistenzmaße 10 bzw. die Kostenfunktion 11 hat.

Nach Abschluss des ersten Optimierungsverfahrens 5 kann das zweite Optimierungsverfahren 6 durchgeführt werden, um einen Fehler der Aufnahmegeometrie weiter zu reduzieren. In jeder Iteration des zweiten Optimierungsverfahrens 6 können zunächst durch einen Rekonstruktionsalgorithmus 14 in Abhängigkeit der Projektionsbilder 2 und der korrigierten Aufnahmegeometrien 15 rekonstruierte Bilddaten 16 bereitgestellt werden. Bei der ersten Iteration können hierbei zunächst die durch das erste Optimierungsverfahren 5 bereitgestellten vorläufigen Aufnahmegeometrien 12 als korrigierte Aufnahmegeometrien 15 verwendet werden.

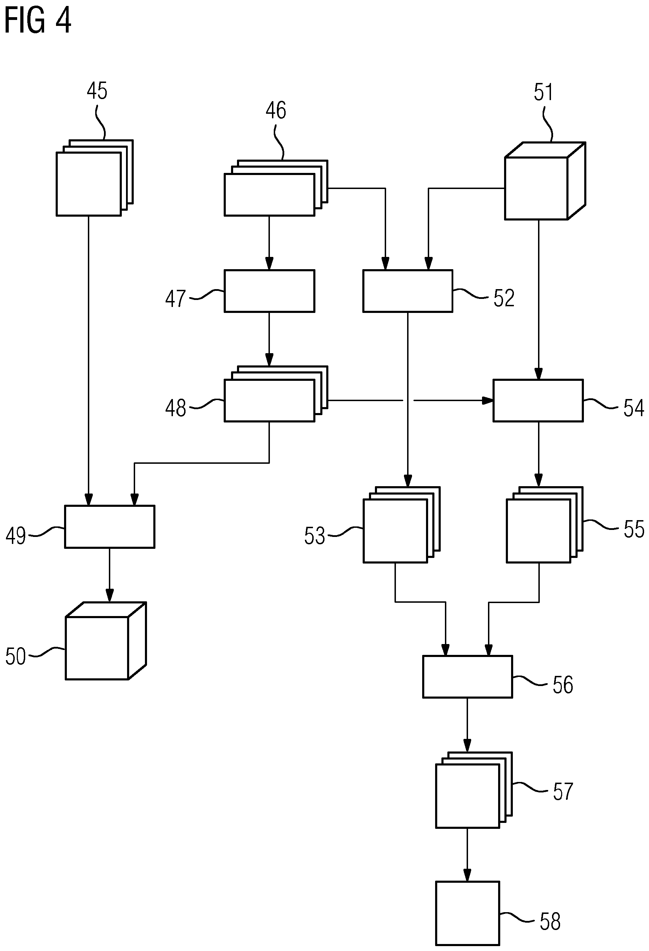

Nach Ermittlung der rekonstruierten Bilddaten 16 werden diese als dreidimensionaler Bilddatensatz oder wenigstens ein aus diesen extrahiertes Schnittbild durch einen Algorithmus 17 weiter verarbeitet, um ein Maß 18 für die Bildqualität der rekonstruierten Bilddaten 16 zu ermitteln. Der Algorithmus 17 kann, wie später noch mit Bezug auf Fig. 4 erläutert werden wird, durch ein Verfahren des Maschinenlernens trainiert werden, so dass das Maß 18 ein gutes Maß dafür darstellen kann, inwieweit die aktuell verwendeten korrigierten Aufnahmegeometrien 15 von den tatsächlich vorliegenden Aufnahmegeometrien abweichen. Eine Kostenfunktion kann von mehreren solcher Maße 18 abhängen, beispielsweise wenn separate Maße 18 für unterschiedliche Schnittbilder berechnet werden oder wenn der Algorithmus 17 verschiedene Maße bereitstellt. Die verschiedenen Maße 18 können beispielsweise durch eine p-Norm kombiniert werden.

Ergänzend kann die Kostenfunktion 19 einen weiteren Term aufweisen, der weitgehend der ersten Kostenfunktion entspricht, wobei zur Ermittlung des Wertes dieses Terms statt der in der ersten Kostenfunktion 11 genutzten vorläufigen Aufnahmegeometrie die in der jeweiligen Iteration genutzte korrigierte Aufnahmegeometrie herangezogen wird. Hierdurch kann erreicht werden, dass im zweiten Optimierungsverfahren gleichzeitig das Maß 18 bzw. die Maße 18 für die Bildqualität und eine Konsistenz zwischen den verschiedenen Projektionsbildern, wie sie bereits im ersten Optimierungsverfahren 5 optimiert wurde, optimiert werden kann. Durch Gewichtung dieses weiteren Terms kann vorgegeben werden, wie stark eine Konsistenzbedingung im zweiten Optimierungsverfahren 6 berücksichtigt werden soll.

In dem Prüfschritt 20 wird anschließend geprüft, ob das zweite Optimierungsverfahren 6 bereits konvergiert ist, also beispielsweise ob der Wert der Kostenfunktion 19 einen Grenzwert unterschreitet. Ist dies nicht der Fall, so erfolgt eine weitere Variation der korrigierten Aufnahmegeometrie 15. Diese kann ebenso wie die Variation der vorläufigen Aufnahmegeometrie 12 gemäß dem Downhill-Simplex-Verfahren oder einem anderen Algorithmus zur Optimierung von nicht linearen Funktionen erfolgen. Besonders bevorzugt erfolgt die Variation der korrigierten Abbildungsgeometrie 15 jedoch in Abhängigkeit von Ergebnisdaten 22 eines Algorithmus 21, der die rekonstruierten Bilddaten 16 oder Teile davon, insbesondere Schichtbilder, als Eingangsdaten verarbeitet. Der Algorithmus 21 kann ebenfalls durch ein Maschinenlernen trainiert werden und dient dazu, aus den rekonstruierten Bilddaten voraussichtliche Bewegungsvektoren bzw. Modifikationen der Geometrieparameter für die korrigierten Abbildungsgeometrien 15 zu ermitteln.

Bevor die variierten korrigierten Aufnahmegeometrien 15 in der nächsten Iteration des zweiten Optimierungsverfahrens 6 genutzt werden, wird im Prüfschritt 16 zunächst geprüft, ob diese bezüglich des ersten Optimierungsverfahrens 5 bzw. der dortigen Kostenfunktion 11 wenigstens so optimal sind, wie die im ersten Optimierungsverfahren 5 ermittelten vorläufigen Abbildungsgeometrien 12. Hierzu kann beispielsweise für die zuletzt im ersten Optimierungsverfahren 5 ermittelten vorläufigen Abbildungsgeometrien 12 der Wert der ersten Kostenfunktion 11 gespeichert werden. Dieser gespeicherte Wert kann mit dem Wert der ersten Kostenfunktion für den Fall verglichen werden, dass statt der vorläufigen Aufnahmegeometrie 12 die variierte korrigierte Aufnahmegeometrie 15 im Rahmen der Berechnung des Werts der ersten Kostenfunktion, insbesondere im Algorithmus 9, berücksichtigt wird. Sind die korrigierten Abbildungsgeometrien weniger optimal, so kann die Variation der korrigierten Abbildungsgeometrien 15 wiederholt werden, bis die Prüfbedingung im Prüfschritt 16 erfüllt ist.

Nach Abschluss des zweiten Optimierungsverfahrens 6 könnten die ermittelte korrigierte Aufnahmegeometrien 15 unmittelbar genutzt werden, um mithilfe eines Rekonstruktionsalgorithmus 23 in Abhängigkeit der Projektionsbilder 2 korrigierte rekonstruierte Bilddaten 24 zu rekonstruieren. In einigen Fällen kann es jedoch vorteilhaft sein, zusätzlich ein drittes Optimierungsverfahren 7 durchzuführen.

Hierbei wird in jeder Iteration des dritten Optimierungsverfahrens 7 zunächst für jedes der Projektionsbilder 2 durch den Algorithmus 25 eine Vorwärtsprojektion von dreidimensionalen Bilddaten, beispielsweise der vorangehend berechneten dreidimensionalen Bilddaten 16, durchgeführt, um für jedes Projektionsbild 2 ein zugeordnetes synthetisches Projektionsbild 26 zu generieren. Durch den Algorithmus 27 werden die synthetischen Projektionsbilder 26 jeweils mit den zugeordneten Projektionsbildern 2 verglichen, um ein jeweiliges Maß 28 für die Abweichung des synthetischen Projektionsbildes 26 vom Projektionsbild 2 zu ermitteln. Hierbei kann beispielsweise eine Bildähnlichkeit auf Basis einer Normalized Gradient Information ausgewertet werden. Die Maße 28 werden in einer dritten Kostenfunktion 29, beispielsweise durch eine p-Norm, zusammengefasst, die durch das dritte Optimierungsverfahren 7 minimiert werden soll.

Im Prüfschritt 30 wird geprüft, ob das dritte Optimierungsverfahren 7 bereits konvergiert ist. Anderenfalls wird die finale Aufnahmegeometrie 31 variiert, was erfolgen kann, wie bereits zu der vorläufigen Aufnahmegeometrie 12 bzw. zu der korrigierten Aufnahmegeometrie 15 erläutert wurde. Anschließend kann die nächste Iteration des dritten Optimierungsverfahrens 7 durchgeführt werden.

Optional kann beispielsweise dann, wenn für die Kostenfunktion 29 ein kleinerer Wert als bisher erreicht wurde, die aktuell ermittelte finale Aufnahmegeometrie genutzt werden, um aktualisierte dreidimensionale Bilddaten zu ermitteln, die in den folgenden Iterationsschritten genutzt werden können.

Nach Abschluss des dritten Optimierungsverfahrens können durch den Algorithmus 23 die rekonstruierten Bilddaten 24 bereitgestellt werden.

Das beschriebene Vorgehen, bei dem zumindest das erste und zweite Optimierungsverfahren genutzt werden, ist vorteilhaft, da Vorteile der einzelnen Optimierungsverfahren, nämlich ihre Robustheit, die Schätzung aller möglichen Bewegungsmuster und ihre Recheneffizienz, vereint werden können. Insbesondere die Prüfung der Nebenbedingung im Prüfschritt 16 kann mit geringem zusätzlichen Rechenaufwand die Konvergenz und Robustheit des zweiten Optimierungsverfahrens 6 deutlich verbessern.

Die mit Bezug auf Fig. 1 und 2 beschriebenen Verfahren können einerseits dazu genutzt werden, Fehlpositionierungen einer Aufnahmeeinrichtung, also beispielsweise Abweichungen der Position bzw. Orientierung eines Röntgendetektors und/oder einer Röntgenquelle von angenommenen Positionen und Orientierungen zu erkennen und zu kompensieren. Hierdurch kann beispielsweise eine fehlerhafte Abbildungsgeometrie aufgrund von Toleranzen und/oder Elastizitäten der Verstellmechanik auch dann ausgeglichen werden, wenn im Wesentlichen frei wählbare Messtrajektorien genutzt werden. Durch die Nutzung des Bildqualitätsmaßes im zweiten Optimierungsverfahren bzw. der 2D/3D-Registrierung im dritten Optimierungsverfahren können auch nicht rigide Bewegungen, beispielsweise Atembewegungen oder ein Herzschlag, insbesondere Atembewegungen in der Leber, kompensiert werden.

In einer nicht gezeigten Variante des Verfahrens könnte auch die Variation der finalen Abbildungsgeometrien 31 wie zur Variation der korrigierten Abbildungsgeometrien 15 erläutert unter der Randbedingung erfolgen, dass die durch die erste Kostenfunktion 11 beschriebene Konsistenz zwischen den Projektionsbildern 2 durch diese Variation nicht verschlechtert wird.

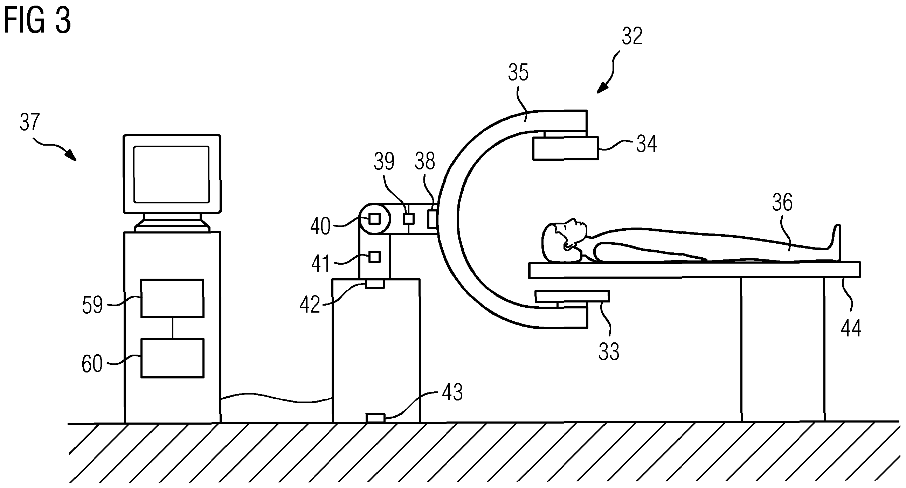

Fig. 3 zeigt eine medizinische Bildgebungseinrichtung 32, die eine Verarbeitungseinrichtung 37 umfasst, und dazu eingerichtet ist, korrigierte Aufnahmegeometrien von Projektionsbildern bzw. korrigierte rekonstruierte Bilddaten zu generieren. Dies kann gemäß der vorangehend zu Fig. 1 bzw. 2 erläuterten Verfahren erfolgen. Die Verfahren können beispielsweise implementiert werden, indem ein die Verfahrensschritte implementiertes Computerprogramm in eine Speichereinrichtung 59 der Verarbeitungseinrichtung 37 geladen wird, wobei die Programmschritte durch einen Prozessor 60 ausgeführt werden können. Hierbei kann unter einem Prozessor 60 allgemein jede Art von programmierbarer Verarbeitungseinrichtung verstanden werden, also beispielsweise ein Mikroprozessor, ein FPGA, ein Grafikprozessor oder auch eine Kombination mehrerer gleicher oder unterschiedlicher Prozessoren. Statt einer lokalen Verarbeitungseinrichtung 37 könnte auch eine Verarbeitung auf einem Server oder durch eine cloudbasierte Lösung erfolgen.

Die Verarbeitungseinrichtung 37 ist im gezeigten Beispiel zudem dazu eingerichtet, die Aufnahme der Projektionsbilder zu steuern. Die Aufnahme der Projektionsbilder erfolgt durch eine Aufnahmeeinrichtung 33, nämlich einen Röntgendetektor, der gemeinsam mit der Röntgenquelle 34 an einem C-Bogen 35 angeordnet ist. Durch eine Vielzahl von Aktoren 38 bis 43 kann der C-Bogen 35 um drei Achsen rotiert und in drei Richtungen verschoben werden, womit auch die Aufnahmegeometrie, also die Lage des Röntgendetektors bezüglich dem Untersuchungsobjekt 36, mit sechs Freiheitsgraden frei vorgebbar ist. Sind die Aufnahmegeometrien für die einzelnen Projektionsbilder bzw. eine durch die Aufnahmeeinrichtung 33 abgefahrene Trajektorie frei vorgebbar, beispielsweise in Abhängigkeit von Eigenschaften des Patienten 36 oder einer Benutzereingabe, so kann eine exakte Kalibrierung der Aufnahmegeometrien typischerweise nicht für alle möglichen Trajektorien erreicht werden, da aufgrund von Bauteiltoleranzen, Elastizitäten einzelner Komponenten usw. unterschiedliche Trajektorien zur Ansteuerung einer bestimmten Position zu unterschiedlichen Positionsabweichungen führen können. Diese Abweichungen können durch das vorangehend erläuterte Verfahren jedoch gut kompensiert werden.

Aufnahmegeometrien werden typischerweise in einem gerätefesten Koordinatensystem geplant. Insbesondere kann eine Planung bezüglich der Lage eines Lagermittels 44, also beispielsweise einer Patientenliege, für das Untersuchungsobjekt 36 erfolgen. Hierbei ist es möglich, dass sich das gesamte Untersuchungsobjekt 36 bzw. Abschnitte des Untersuchungsobjektes 36 bewegt. Beispielsweise kann ein Patient unwillkürlich geringe Bewegungen durchführen bzw. eine Atmung und/oder ein Herzschlag kann gewisse Abschnitte seines Körpers bezüglich anderen Körperabschnitten verschieben. Auch derartige Bewegungen können durch die vorangehend erläuterten Verfahren zumindest weitgehend kompensiert werden. Die Bildgebungsvorrichtung kann beispielsweise zur CT-Angiographie dienen.

Wie zu Fig. 2 bereits erläutert wurde, kann der Algorithmus 17 zur Ermittlung des Maßes 18 für die Bildqualität durch ein Verfahren des Maschinenlernens trainiert werden. Das Training soll hierbei derart erfolgen, dass das Maß 18 ein gutes Maß für die Abweichung der in der aktuellen Iteration angenommenen korrigierten Aufnahmegeometrie von der tatsächlichen Aufnahmegeometrie bzw. für die Relativbewegung zwischen Untersuchungsobjekt und Aufnahmeeinrichtung bezüglich der angenommenen korrigierten Aufnahmegeometrie ist. Hierbei kann ein überwachtes Lernen genutzt werden, bei dem der Algorithmus durch bekannte Verfahren des Maschinenlernens, beispielsweise durch eine Back-Propagation of Error, mithilfe von Trainingsdatensätzen trainiert wird, die jeweils rekonstruierte Bilddaten und einen Sollwert für das Maß für die Bildqualität für diese Bilddaten umfassen.

Im Folgenden wird mit Bezug auf Fig. 4 beispielhaft eine Möglichkeit erläutert, entsprechende Trainingsdatensätze bereitzustellen. Hierbei werden zunächst Projektionsbilder 45 vorgegeben, deren Aufnahmegeometrie mit guter Genauigkeit bekannt ist. Beispielsweise können die Projektionsbilder 45 erfasst werden, indem die Aufnahmeeinrichtung entlang einer Trajektorie geführt wird, für die vorangehend eine Kalibrierung erfolgte. Für zumindest Teile der Trainingsdatensätze können die Projektionsbilder 45 auch generiert werden, indem ein dreidimensionaler Bilddatensatz, der mit hoher Qualität rekonstruiert wurde bzw. der synthetisch generiert wurde, vorwärtsprojiziert wird.

Die Aufnahmegeometrien 46 werden gemäß einer Modifikationsvorgabe 47 modifiziert, um modifizierte Aufnahmegeometrien 48 bereitzustellen. Beispielsweise kann die Modifikationsvorgabe 47 die Aufnahmegeometrien 46 derart modifizieren, dass die modifizierte Aufnahmegeometrie 48 für zumindest Teile der Projektionsbilder 45 eine Verschiebung in wenigstens eine Richtung und/oder eine Rotation um wenigstens eine Achse gegenüber der jeweils zugeordneten Aufnahmgeometrie 46 zeigt. Anders ausgedrückt werden gezielt falsche Aufnahmegeometrien vorgegeben, wobei der Fehler jeweils wohl bekannt ist.

Durch einen Rekonstruktionsalgorithmus 49 werden die Projektionsbilder 45 gemäß der modifizierten Aufnahmegeometrie 48 rekonstruiert, um rekonstruierte Bilddaten 50 zu erhalten. Diese zeigen genau jene Bildstörungen bzw. Qualitätsverschlechterungen, die bei einer Veränderung der Aufnahmegeometrie gemäß der Modifikationsvorgabe erwartet werden.

Der Sollwert für das Maß der Bildqualität, der im Trainingsdatensatz enthalten sein soll, soll so bestimmt werden, dass sich das Maß für die Bildqualität bezüglich einer Veränderung der Aufnahmegeometrie ähnlich zu einem Back Projection Mismatch, also ähnlich zu einem Maß für eine Veränderung der Positionen von Punktprojektionen in den Projektionsbildern, verhält.

Um dies zu erreichen wird zunächst ein synthetischer dreidimensionaler Bilddatensatz 51 vorgegeben, der insbesondere mehrere isolierte, insbesondere in gleichen Abständen zueinander angeordnete Bildpunkte umfassen kann. Der Bilddatensatz 51 wird einerseits durch den Algorithmus 52 gemäß der ursprünglichen Abbildungsgeometrien 46 vorwärtsprojiziert, um erste synthetischer Projektionsbilder 53 zu erhalten. Andererseits wird er durch den Algorithmus 54 gemäß der modifizierten Aufnahmegeometrien 48 projiziert, um zweite synthetische Projektionsbilder 55 zu erhalten. Der Algorithmus 56 vergleicht die ersten und zweiten synthetischen Projektionsbilder 53, 55, um für jeden der Punkte in dem Bilddatensatz 51 eine Entfernung der Position in dem jeweiligen zweiten synthetischen Projektionsbild 55 von der Position in den zugeordneten ersten synthetischen Projektionsbild 52 zu ermitteln. Diese Abstände 57 werden durch Nutzung einer p-Norm, insbesondere einer 2-Norm, zu dem Back Projection Mismatch 58 zusammengefasst, der als Sollwert für das Maß der Bildqualität in den jeweiligen Trainingsdatensatz aufgenommen werden kann.

Ausgehend von dem gleichen Satz von Projektionsbildern 45 können eine Vielzahl von Trainingsdaten generiert werden, in dem jeweils unterschiedliche Modifikationsvorgaben 47 verwendet werden.

Das Training des im zweiten Optimierungsverfahren 6 in Fig. 2 genutzten Algorithmus 21 ist nicht explizit dargestellt. Da dieser Algorithmus beispielsweise Bewegungsvektoren, also Änderungen der Geometrieparameter 4 voraussagen soll, kann ein Trainingsdatensatz zum Training dieses Algorithmus 21 mit einer leichten Modifikation der mit Bezug auf Fig. 4 beschriebenen Vorgehensweise bereitgestellt werden. Die rekonstruierten Bilddaten können auf gleiche Weise bereitgestellt werden. Statt dem Sollwert für das Maß 58 kann der jeweilige Trainingsdatensatz jedoch mehrere Werte umfassen, die die Modifikationsvorgabe 47 beschreiben. Beispielsweise kann die Modifikationsvorgabe 47 Änderungen der Geometrieparameter 4 vorgeben, die dann unmittelbar als Sollwerte in dem Trainingsdatensatz aufgenommen werden können. Alternativ wäre es auch möglich, einen gemeinsamen Algorithmus zu nutzen, um das Maß 18 für die Bildqualität und die Ergebnisdaten 22 vorzugeben. In diesem Fall müsste das in Fig. 4 gezeigte Vorgehen zur Bereitstellung von Trainingsdatensätzen ausschließlich dadurch modifiziert werden, dass in jedem Trainingsdatensatz zusätzlich die Modifikationsvorgabe 47 betreffende Sollwerte mit aufgenommen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung gemäß der beigefügten Patentansprüche zu verlassen.

**Patentansprüche**

1. Verfahren zur Ermittlung von korrigierten Aufnahmegeometrien von Projektionsbildern (2) eines Projektionsbilddatensatzes (1), umfassend die Schritte:

   - Bereitstellen eines Projektionsbilddatensatzes (1), der mehrere in verschiedenen Aufnahmegeometrien (3) durch eine Aufnahmeeinrichtung (34) erfasste Projektionsbilder (2) eines Untersuchungsobjekts (36) umfasst,

- Ermitteln einer vorläufigen Aufnahmegeometrie (12) für jedes der Projektionsbilder (2) durch ein erstes Optimierungsverfahren (5), indem eine erste Kostenfunktion (11) durch Variation der vorläufigen Aufnahmegeometrie (12) minimiert wird, wobei die erste Kostenfunktion (11) von mehreren Konsistenzmaßen (10) abhängt, die in Abhängigkeit der vorläufigen Aufnahmegeometrie (12) für ein jeweiliges Paar (8) von Projektionsbildern (2) ermittelt werden, und

- Ermittlung der jeweiligen korrigierten Aufnahmegeometrie (15) für jedes der Projektionsbilder (2) durch ein zweites Optimierungsverfahren (6), indem eine zweite Kostenfunktion (19) durch Variation der korrigierten Aufnahmegeometrien (15) minimiert wird, wobei die zweite Kostenfunktion (19) von einem Maß (18) für eine Bildqualität von in Abhängigkeit der Projektionsbilder (2) und der korrigierten Aufnahmegeometrien (15) rekonstruierten Bilddaten (16) abhängt, wobei in einem ersten Iterationsschritt des zweiten Optimierungsverfahrens (6) die durch das erste Optimierungsverfahren (5) ermittelten vorläufigen Aufnahmegeometrien (12) als korrigierte Aufnahmegeometrien (15) verwendet werden.

2. Verfahren nach Anspruch 1, **dadurch gekennzeichnet, dass** der Projektionsbilddatensatz (1) ermittelt wird, indem für jedes der Projektionsbilder (2) eine Sollposition und/oder Sollorientierung für die Aufnahmeeinrichtung (33) vorgegeben und wenigstens ein Aktor (38 - 43) verwendet wird um, um die Aufnahmeeinrichtung (33) in die Sollposition und/oder Sollorientierung zu verbringen, wonach die Aufnahmeeinrichtung (33) zur Aufnahme des jeweiligen Projektionsbildes (2) verwendet wird, wobei in einem ersten Iterationsschritt des ersten Optimierungsverfahrens (5) in Abhängigkeit der jeweiligen Sollposition und/oder Sollorientierung vorgegebene Aufnahmegeometrien (3) als vorläufige Aufnahmegeometrien (12) verwendet werden.

3. Verfahren nach Anspruch 2, **dadurch gekennzeichnet**, die Sollpositionen und/oder Sollorientierungen in Abhängigkeit des Untersuchungsobjekts (36) und/oder einer Bedieneingabe eines Benutzers vorgegeben werden und/oder dass die Sollpositionen nicht auf einer Kreisbahn liegen.

4. Verfahren einem der vorangehenden Ansprüche, **dadurch gekennzeichnet, dass** als Aufnahmeeinrichtung (33) ein Röntgendetektor verwendet wird, der gemeinsam mit einer Röntgenquelle (34) an einem Gestell, insbesondere einem C-Bogen (35), angeordnet ist.

5. Verfahren nach einem der vorangehenden Ansprüche,

dadurch gekennzeichnet, dass der Projektionsbilddatensatz (1) ermittelt wird, indem für jedes der Projektionsbilder (2) die oder eine Sollposition und/oder Sollorientierung für die Aufnahmeeinrichtung (33) bezüglich einem Lagermittel (44) vorgegeben wird, dass das Untersuchungsobjekt (36) lagert, und der oder wenigstens ein Aktor (38 - 43) verwendet wird, um die Aufnahmeeinrichtung (33) in die Sollposition und/oder Sollorientierung zu verbringen, wonach die Aufnahmeeinrichtung (33) zur Aufnahme des jeweiligen Projektionsbildes (2) verwendet wird, wobei in dem oder einem ersten Iterationsschritt des ersten Optimierungsverfahrens (5) die vorläufigen Aufnahmegeometrien (12) unter der Annahme vorgegeben werden, dass das Untersuchungsobjekt (36) zwischen den Aufnahmen der Projektionsbilder (2) bezüglich dem Lagermittel (44) unbewegt ist oder sich gemäß einem vorgegebenen Bewegungsmuster bewegt.

6. Verfahren nach einem der vorangehenden Ansprüche, **dadurch gekennzeichnet, dass** das zweite Optimierungsverfahren (6) unter der Randbedingung durchgeführt wird, dass der Wert der ersten Kostenfunktion (11) für die korrigierten Aufnahmegeometrien (15) kleiner oder gleich ist als der Wert der ersten Kostenfunktion (11) für die durch das erste Optimierungsverfahren (5) ermittelten vorläufigen Aufnahmegeometrien (12).

7. Verfahren nach einem der vorangehenden Ansprüche, **dadurch gekennzeichnet, dass** zur Ermittlung des Maßes (18) für die Bildqualität ein Algorithmus (17) verwendet wird, der durch ein Verfahren des Maschinenlernens trainiert ist.

8. Verfahren nach Anspruch 7, **dadurch gekennzeichnet, dass** der Algorithmus (17) durch Trainingsdatensätze trainiert ist oder wird, die jeweils rekonstruierte Bilddaten (50) und einen Sollwert (58) für das für diese rekonstruierten Bilddaten (50) zu ermittelnde Maß (18) für die Bildqualität umfassen, wobei die rekonstruierten Bilddaten (50) derart aus vorgegebenen Projektionsbildern (45) rekonstruiert werden oder sind, dass bei der Rekonstruktion eine gemäß einer Modifikationsvorgabe (47) modifizierte Aufnahmegeometrie (48) für wenigstens eines der Projektionsbilder (45) berücksichtigt wird, wobei der Sollwert (58) in Abhängigkeit der Modifikationsvorgabe (47) ermittelt wird oder ist.

9. Verfahren nach einem der vorangehenden Ansprüche, **dadurch gekennzeichnet, dass** die zweite Kostenfunktion (19) zusätzlich von mehreren Konsistenzmaßen (10) abhängt, die in Abhängigkeit der korrigierten Aufnahmegeometrie (15) für ein jeweiliges Paar (8) von Projektionsbildern (2) ermittelt werden.

10. Verfahren nach einem der vorangehenden Ansprüche,
**dadurch gekennzeichnet, dass** die vorläufige und die korrigierte Aufnahmegeometrie (12, 16) jedes Projektionsbildes (2) durch mehrere Geometrieparameter (4) beschrieben ist, wobei die Geometrieparameter (4) jeweils eine Translation oder eine Rotation der Aufnahmeeinrichtung (33) oder einer Komponente der Aufnahmeeinrichtung (33) bezüglich des Untersuchungsobjekts (36) beschreiben, wobei im Rahmen des ersten Optimierungsverfahrens (5) ausschließlich eine nicht alle Geometrieparameter umfassende Untergruppe der Geometrieparameter (4) variiert wird, um die vorläufigen Aufnahmegeometrien (12) zu bestimmen.

11. Verfahren nach einem der vorangehenden Ansprüche,
**dadurch gekennzeichnet, dass** für wenigstens eines der Projektionsbilder (2) durch ein drittes Optimierungsverfahren (7) eine finale Aufnahmegeometrie (31) ermittelt wird, indem eine dritte Kostenfunktion (29) durch Variation der finalen Aufnahmegeometrie (31) minimiert wird, wobei die dritte Kostenfunktion (29) von einem Maß (28) für eine Abweichung zwischen einer Vorwärtsprojektion (26) von dreidimensionalen Bilddaten (16) gemäß der finalen Abbildungsgeometrie (31) von dem Projektionsbild (2) abhängt, wobei in einem ersten Iterationsschritt des dritten Optimierungsverfahrens (7) die durch das zweite Optimierungsverfahren (6) ermittelte korrigierte Aufnahmegeometrie (16) für das jeweilige Projektionsbild (2) als finale Aufnahmegeometrie (31) verwendet wird.

12. Verfahren nach einem der vorangehenden Ansprüche,
**dadurch gekennzeichnet, dass** die Variation der vorläufigen und/oder der korrigierten und/oder der finalen Aufnahmegeometrie (12, 16, 31) für wenigstens ein jeweiliges Projektionsbild (2) jeweils in Abhängigkeit von Ergebnisdaten (22) eines, insbesondere durch ein Verfahren des Maschinenlernens trainierten, Algorithmus (21) erfolgt, wobei der Algorithmus (21) als Eingangsdaten in Abhängigkeit der Projektionsbilder (2) rekonstruierte Bilddaten (16), insbesondere wenigstens ein Schichtbild, verarbeitet.

13. Verarbeitungseinrichtung zur Ermittlung von korrigierten Aufnahmegeometrien (15) von Projektionsbildern (2), **dadurch gekennzeichnet, dass** sie zur Durchführung des Verfahrens nach einem der vorangehenden Ansprüche eingerichtet ist.

14. Computerprogramm, welches direkt in eine Speichereinrichtung (59) einer Verarbeitungseinrichtung (37) ladbar ist, mit Programmabschnitten, um alle Schritte des Verfahrens nach einem der Ansprüche 1 bis 12 auszuführen, wenn das Computerprogramm in der Verarbeitungseinrichtung (37) ausgeführt wird.

15. Computerlesbares Medium, auf welchem von einer Verarbeitungseinrichtung (37) einlesbare und ausführbare Programmabschnitte gespeichert sind, um alle Schritte des Verfahrens nach einem der Ansprüche 1 bis 12 auszuführen, wenn die Programmabschnitte von der Verarbeitungseinrichtung (37) ausgeführt werden.

**Claims**

1. Method for determining corrected acquisition geometries of projection images (2) of a projection image dataset (1), comprising the following steps:

   - Providing a projection image dataset (1) which comprises a plurality of projection images (2) of an object under examination (36) that have been acquired by an acquisition device (34) in different acquisition geometries (3),
   - Determining a provisional acquisition geometry (12) for each of the projection images (2) by means of a first optimisation method (5) by minimising a first cost function (11) by varying the provisional acquisition geometry (12), wherein the first cost function (11) is contingent on a plurality of consistency measures (10) which are determined on the basis of the provisional acquisition geometry (12) for a respective pair (8) of projection images (2), and
   - Determining the respective corrected acquisition geometry (15) for each of the projection images (2) by means of a second optimisation method (6) by minimising a second cost function (19) by varying the corrected acquisition geometries (15), wherein the second cost function (19) is contingent on a measure (18) for an image quality of image data (16) reconstructed on the basis of the projection images (2) and the corrected acquisition geometries (15), wherein, in a first iteration step of the second optimisation method (6), the provisional acquisition geometries (12) determined by the first optimisation method (5) are used as corrected acquisition geometries (15).

2. Method according to claim 1, **characterised in that** the projection image dataset (1) is determined by predefining for each of the projection images (2) a desired position and/or desired orientation for the acquisition device (33) and by using at least one actuator (38 - 43) to place the acquisition device (33) in the desired position and/or desired orientation, after which the acquisition device (33) is used to acquire the respective projection image (2), wherein, in a first iteration step of the first optimisation method (5), acquisition geometries (3) predefined on the basis of the respective desired position and/or desired orientation are used as provisional acquisition geometries (12).

3. Method according to claim 2, **characterised in that** the desired positions and/or desired orientations are predefined depending on the object under examination (36) and/or a user input and/or that the desired positions do not lie on a circular path.

4. Method according to one of the preceding claims, **characterised in that** an X-ray detector that is disposed together with an X-ray source (34) on a support, in particular a C-arm (35), is used as an acquisition device (33) .

5. Method according to one of the preceding claims, **characterised in that** the projection image dataset (1) is determined by predefining for each of the projection images (2) the or a desired position and/or desired orientation for the acquisition device (33) with respect to a positioning means (44) on which the object under examination (36) is supported, and the or at least one actuator (38 - 43) is used to place the acquisition device (33) in the desired position and/or desired orientation, after which the acquisition device (33) is used to acquire the respective projection image (2), wherein, in the or a first iteration step of the first optimisation method (5), the provisional acquisition geometries (12) are predefined on the assumption that the object under examination (36) does not move with respect to the positioning means (44) between the acquisitions of the projection images (2) or moves according to a predefined pattern of motion.

6. Method according to one of the preceding claims, **characterised in that** the second optimisation method (6) is carried out subject to the constraint that the value of the first cost function (11) for the corrected acquisition geometries (15) is less than or equal to the value of the first cost function (11) for the provisional acquisition geometries (12) determined by the first optimisation method (5).

7. Method according to one of the preceding claims, **characterised in that**, to determine the measure (18) for the image quality, an algorithm (17) that has been trained by a machine learning method is used.

8. Method according to claim 7, **characterised in that** the algorithm (17) has been or is trained by means of training datasets which include in each case the reconstructed image data (50) and a desired value (58) for the image quality measure (18) to be determined for this reconstructed image data (50), wherein the reconstructed image data (50) is or has been reconstructed from predefined projection images (45) in such a way that an acquisition geometry (48) for at least one of the projection images (45) that has been modified according to a modification predefinition (47) is taken into account for the reconstruction, wherein the desired value (58) is or has been determined as a function of the modification predefinition (47).

9. Method according to one of the preceding claims, **characterised in that** the second cost function (19) is additionally contingent on a plurality of consistency measures (10) which are determined as a function of the corrected acquisition geometry (15) for a respective pair (8) of projection images (2).

10. Method according to one of the preceding claims, **characterised in that** the provisional and the corrected acquisition geometry (12, 16) of each projection image (2) is described by a plurality of geometry parameters (4), wherein the geometry parameters (4) each describe a translation or a rotation of the acquisition device (33) or of a component of the acquisition device (33) with respect to the object under examination (36), wherein, as part of the first optimisation method (5), only a subgroup of the geometry parameters (4) that does not include all the geometry parameters is varied in order to determine the provisional acquisition geometries (12).

11. Method according to one of the preceding claims, **characterised in that** a final acquisition geometry (31) is determined for at least one of the projection images (2) by a third optimisation method (7) by minimising a third cost function (29) by varying the final acquisition geometry (31), wherein the third cost function (29) is contingent on a measure (28) for a deviation between a forward projection (26) of the three-dimensional image data (16) according to the final imaging geometry (31) from the projection image (2), wherein, in a first iteration step of the third optimisation method (7), the corrected acquisition geometry (16) for the respective projection image (2) determined by the second optimisation method (6) is used as the final acquisition geometry (31).

12. Method according to one of the preceding claims, **characterised in that** the provisional and/or corrected and/or final acquisition geometry (12, 16, 31) for at least one respective projection image (2) is varied in each case on the basis of result data (22) of an algorithm (21), particularly of one trained by a machine learning method, wherein, as input data, the algorithm (21) processes image data (16), in particular at least one image slice, reconstructed on the basis of the projection images (2).

13. Processing device for determining corrected acquisition geometries (15) of projection images (2), **characterised in that** it is designed to carry out the method according to one of the preceding claims.

14. Computer program which can be loaded directly into a storage device (59) of a processing device (37), comprising program sections for executing all the steps of the method according to one of claims 1 to 12 when the computer program is executed in the processing device (37) .

15. Computer-readable medium on which are stored program sections that can be read and executed by a processing device (37) in order to carry out all the steps of the method according to one of claims 1 to 12 when the program sections are executed by the processing device (37) .

## Revendications

1. Procédé de détermination de géométries d'enregistrement corrigées d'images (2) de projection d'un ensemble (1) de données d'images de projection, comprenant les stades :

   - on se procure un ensemble (1) de données d'images de projection, qui comprend plusieurs images (2) de projection, prises en diverses géométrie (3) d'enregistrement par un dispositif (34) d'enregistrement, d'un objet (36) à examiner,
   - on détermine une géométrie (12) d'enregistrement provisoire pour chacune des images (2) de projection par un premier procédé (5) d'optimisation, en minimisant une première fonction (11) de coût par variation de la géométrie (12) d'enregistrement provisoire, la première fonction (11) de coût dépendant de plusieurs mesures (10) de cohérence, qui sont déterminées en fonction de la géométrie (12) d'enregistrement provisoire pour une paire (18) respective d'images (2) de projection, et
   - on détermine la géométrie (15) d'enregistrement corrigé respective pour chacune des images (2) de projection par un deuxième procédé (6) d'optimisation, en minimisant une deuxième fonction (19) de coût par variation des géométries (15) d'enregistrement corrigées, la deuxième fonction (19) de coût dépendant d'une mesure (18) d'une qualité d'image de données (16) d'images reconstruites en fonction des images (2) de projection et des géométries (15) d'enregistrement corrigées, dans lequel, dans un premier stade d'itération du deuxième procédé (6) d'optimisation, on utilise comme géométries (15) d'enregistrement corrigées les géométries (12) d'enregistrement provisoires déterminées par le premier procédé (5) d'optimisation.

2. Procédé suivant la revendication 1, **caractérisé en ce que** l'on détermine l'ensemble (1) de données d'images de projection, en prescrivant pour chacune des images (2) de projection une position de consigne et/ou une orientation de consigne du dispositif (33) d'enregistrement et en utilisant au moins un actionneur (38 à 43) afin de mettre le dispositif (33) d'enregistrement dans la position de consigne et/ou l'orientation de consigne, en utilisant ensuite le dispositif (33) d'enregistrement pour l'enregistrement de l'image (2) de projection respective, dans lequel, dans un premier stade d'itération du premier procédé (5) d'optimisation, on utilise comme géométries (12) d'enregistrement provisoires des géométries (3) d'enregistrement données à l'avance en fonction de la position de consigne et/ou de l'orientation de consigne respective.

3. Procédé suivant la revendication 2, **caractérisé en ce que** l'on prescrit les positions de consigne et/ou les orientations de consigne en fonction de l'objet (36) à examiner et/ou d'une entrée de commande d'un utilisateur et/ou **en ce que** les positions de consigne ne se trouvent pas sur une orbite circulaire.

4. Procédé suivant l'une des revendications précédentes, **caractérisé en ce que** l'on utilise comme dispositif (3) d'enregistrement un détecteur à rayons X, qui est monté conjointement avec une source (34) de rayons X sur un bâti, notamment sur un arceau (35) en C.

5. Procédé suivant l'une des revendications précédentes, **caractérisé en ce que** l'on détermine l'ensemble (1) de données d'image de projection, en prescrivant pour chacune des images (2) de projection la ou une position de consigne et/ou une orientation de consigne du dispositif (33) d'enregistrement par rapport à une couchette (44), **en ce que** l'objet (36) à examiner est couché, et en utilisant le ou au moins un actionneur (38 à 43) afin de mettre le dispositif (33) d'enregistrement dans la position de consigne et/ou dans l'orientation de consigne, en utilisant ensuite le dispositif (33) d'enregistrement pour enregistrer l'image (2) de projection respective, dans lequel, dans le stade d'itération ou dans un premier stade d'itération du premier procédé (5) d'optimisation, on prescrit les géométries (12) d'enregistrement provisoires en supposant que l'objet (36) à examiner ne se déplace pas entre les enregistrements des images (2) de projection par rapport à la couchette (44) ou se déplace suivant un modèle de déplacement donné à l'avance.

6. Procédé suivant l'une des revendications précédentes, **caractérisé en ce que** l'on effectue le deuxième procédé (6) d'optimisation dans les conditions aux limites que la valeur de la première fonction (11) de coût pour les géométries (15) d'enregistrement corrigées soient inférieure ou égale à la valeur de la première fonction (11) de coût pour les géométries (12) d'enregistrement provisoires déterminées par le premier procédé (5) d'optimisation.

7. Procédé suivant l'une des revendications précédentes, **caractérisé en ce que** l'on utilise pour la détermination de la mesure (18) de la qualité d'image un algorithme (17) qui subit un apprentissage par un procédé d'apprentissage automatique.

8. Procédé suivant la revendication 7, **caractérisé en ce que** l'algorithme (17) subit un apprentissage par des ensembles de données d'apprentissage, qui comprennent des données (50) d'images reconstruites respectivement et une valeur (58) de consigne pour la mesure (18), à déterminer pour ces données (50) d'images reconstruites, de la qualité d'image les données (50) d'images reconstruites étant reconstruites à partir d'images (45) de projection données à l'avance de manière à tenir compte, lors de la reconstruction, d'une géométrie (48) d'enregistrement, modifiée suivant une prescription (47) de modification, d'au moins l'une des images (45) de projection, la valeur (58) de consigne étant déterminée en fonction de la prescription (47) de modification.

9. Procédé suivant l'une des revendications précédentes, **caractérisé en ce que** la deuxième fonction (19) de coût dépend en outre de plusieurs mesures (10) de cohérence, qui sont déterminées en fonction de la géométrie (15) d'enregistrement corrigée d'une paire (8) respective d'images (2) de projection.

10. Procédé suivant l'une des revendications précédentes, **caractérisé en ce que** la géométrie (12) d'enregistrement provisoire et la géométrie (16) d'enregistrement corrigée de chaque image (2) de projection sont décrites par plusieurs paramètres (4) géométriques, les paramètres (4) géométriques décrivant chacun une translation ou une rotation du dispositif (33) d'enregistrement ou d'un élément du dispositif (33) d'enregistrement par rapport à l'objet (36) à examiner, dans lequel, dans le cadre du premier procédé (5) d'optimisation, on fait varier exclusivement un sous-groupe, ne comprenant pas tous les paramètres géométriques, des paramètres (4) géométriques pour déterminer les géométries (12) d'enregistrement provisoires.

11. Procédé suivant l'une des revendications précédentes, **caractérisé en ce que**, pour au moins l'une des images (2) de projection, on détermine par un troisième procédé (7) d'optimisation, une géométrie (31) d'enregistrement finale, en minimisant une troisième fonction (29) de coût par variation de la géométrie (31) d'enregistrement finale, la troisième fonction (29) de coût dépendant d'une mesure (28) d'un écart entre une projection (26) vers l'avant de données (16) d'images en trois dimensions suivant la géométrie (31) d'enregistrement finale à l'image (2) de projection, dans lequel, dans une premier stade d'itération du troisième procédé (7) d'optimisation, on utilise, comme géométrie (31) d'enregistrement finale, la géométrie (16) d'enregistrement, corrigée et déterminée par le deuxième procédé (6) d'optimisation, de l'image (2) de projection respective.

12. Procédé suivant l'une des revendications précédentes, **caractérisé en ce que** la variation de la géométrie (12, 16, 31) provisoire et/ou corrigée et/ou finale d'au moins une image (2) de projection respective s'effectue respectivement en fonction de données (22) de résultat d'un algorithme (21) ayant subi un apprentissage, notamment par un procédé d'apprentissage automatique, l'algorithme (21) traitant, comme données d'entrée, des données (16) d'images reconstruites en fonction des images (2) de projection, notamment au moins une image de tomodensitométrie.

13. Dispositif de traitement pour la détermination de géométries (15) d'enregistrement corrigées d'images (2) de projection, **caractérisé en ce qu'**il est conçu pour effectuer le procédé suivant l'une des revendications précédentes.

14. Programme d'ordinateur, qui peut être chargé directement dans un dispositif (59) de mise en mémoire d'un dispositif (37) de traitement, comprenant des parties de programme pour exécuter tous les stades du procédé suivant l'une des revendications 1 à 12 lorsque le programme d'ordinateur est exécuté dans le dispositif (37) de traitement.

15. Support déchiffrable par ordinateur et sur lequel sont mises en mémoire des parties de programme pouvant être déchiffrées et réalisées par un dispositif (37) de traitement, afin d'effectuer tous les stades du procédé suivant l'une des revendications 1 à 12 lorsque les parties de programme sont réalisées par le dispositif (37) de traitement.

FIG 1

# FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011003653 A1

**In der Beschreibung aufgeführte Nicht-Patentliteratur**

- October), Rigid motion compensation in interventional C-arm CT using consistency measure on projection data. **FRYSCH, R. ; ROSE, G.** International Conference on Medical Image Computing and Computer-Assisted Intervention. Springer, 2015, 298-306
- **OUADAH, S. et al.** Self-calibration of cone-beam CT geometry using 3D-2D image registration. *Physics in Medicine & Biology,* 2016, vol. 61 (7), 2613
- Data consistency conditions in X-ray transmission imaging and their application to the self-calibration problem. **LESAINT ; JERÔME.** PhD diss. Universite Grenoble Alpes, 2018
- **WICKLEIN, J. et al.** Image features for misalignment correction in medical flat-detector CT. *Medical Physics,* 2012, vol. 39 (8), 4918-4931
- U-Net: Convolutional Networks for Biomedical Image Segmentation. **RONNEBERGER O. et al.** International Conference on Medical Image Computing and computer-assisted Intervention. Springer, 2015, 234-241